# EUROPEAN PATENT SPECIFICATION

(11) **EP 4 088 848 B1**
(45) Date of publication and mention of the grant of the patent: **06.12.2023**
(21) Application number: 22172318.2
(22) Date of filing: 09.05.2022
(51) Int. Cl.: B23K 7/10, B23K 7/00, B23K 37/02

(54) **TRANSPORTABLE SYSTEM FOR OXYFUEL CUTTING LARGE METAL MATERIALS**
TRANSPORTABLES SYSTEM ZUM BRENNSTOFFSCHNEIDEN VON GROSSEN METALLMATERIALIEN
SYSTÈME TRANSPORTABLE POUR OXYCOUPAGE DE GROS MATÉRIAUX MÉTALLIQUES

(30) Priority: 13.05.2021 IT 202100012323
(43) Date of publication of application: 16.11.2022
(73) Proprietor: A.L.B.A. S.r.l., 16153 Genova (IT)
(72) Inventor: D'OTTAVI, Riccardo, 16153 Genova (GE) (IT)
(74) Representative: Kratter, Carlo

(56) References cited:
- DE-A1-102017 113 234
- KR-A- 20200 032 861
- KR-B1- 101 236 757

## Description

Object of the present invention is a transportable system for oxy-fuel cutting large metal materials, in particular scrap pieces, according to the characterizing part of the independent claims.

Fixed plants are known for oxy-fuel cutting large metal scrap pieces (for example steel, cast iron) such as scrapped slabs and blooms, ladles and tundishes, slag pots, scrapped coils, scrapped rolls and various scrap materials, in order to obtain metal pieces of reduced dimensions and suitable for example, to be charged into an electric furnace, these plants are well known for their reliability, ruggedness and for their short cutting times.

The known plants are fixed and comprise a bearing structure generally made of reinforced concrete to which a machine for cutting scrap pieces, of the type having one or more oxy-fuel torches, means for handling these torches and all the usual components necessary for operating and controlling the cutting operations is stably connected. Generally these plants have significant dimensions and encumbrances (for example they have an encumbrance of at least forty square meters) and are able to cut metal materials with a thickness of up to 2 meters.

It is also known to use manually operated oxy-fuel cutting torches for cutting scrap pieces with not too high thickness, which, however, besides being not easy to use, are also dangerous for the operators.

In the present context, large metal materials and large metal scrap pieces mean metal bodies that can have different shapes and variable thicknesses, for example thicknesses of 500 mm and even greater than 500 mm, for example between 800 mm and 1000 mm, if appropriately put one close to the other, in order to make the cutting process faster and more efficient.

DE102017113234 describes a tubular containment structure which can be positioned inside a piece to be cut, by means of a forklift.

KR 2020 0032861 describes a device for cutting a material, comprising a cutting torch which is mounted on a movable trolley.

KR 101 236 757 describes a trolley which can house therein a part of a welding device. The object of the present invention is to provide a system for cutting metal materials, of the type indicated above, which is compact and can be easily and quickly installed where it is necessary to carry out the cutting operations.

A further object is to provide a system that is easily transportable, in order to be able to install it anywhere as an alternative to the current manual systems, thus making the size-to-size operation safer, faster, cheaper and more efficient also in terms of energy savings. These and other objects which will be apparent to those skilled in the art are achieved by a system according to the characterizing part of the attached claims and in particular of the main claim.

For a better understanding of the present invention, drawings are attached by way of nonlimiting example, wherein:
Figures 1A-B show schematic, partially sectioned and simplified views, side and top respectively, of a first embodiment of the invention;
Figures 2A-B show schematic, partially sectioned and simplified views, side and top respectively, of the first embodiment of the invention in which a first component thereof is highlighted;
Figures 3A-B show schematic, partially sectioned and simplified views, top and side respectively, of the first embodiment of the invention in which a second component thereof is highlighted;
Figures 4A-E show schematic perspective and simplified views, respectively, of a part of a further component of the first embodiment of the invention, and front, perspective, side and front enlarged views of said further component;
Figures 5A-C show side and partially sectioned schematic views of the first embodiment of the invention in different stages of its functioning;
Figures 6A-B show schematic, perspective, side and partially sectioned views of a further component of the first embodiment of the invention in different situations of use,
Figures 7A and 7C show diagrams of two fluid supply circuits of the first embodiment of the invention;
Figure 7B shows a partial side view of further components of the first embodiment of the invention;
Figure 7D shows a simplified diagram of a control circuit of the first embodiment of the invention;
Figures 8A-C show schematic, partially sectioned and simplified views, side and top respectively, of a second embodiment of the invention;
Figures 9A-D show schematic, partially sectioned and simplified views, top and side respectively, of a variant of a component of the second embodiment, in different positions of use,
Figures 10A-D show schematic side and top and partially sectioned views of the second embodiment of the invention in different stages of its functioning;
Figures 11A-D show schematic views, respectively side, in longitudinal and simplified section from the top partially sectioned and simplified, and in cross section, simplified and with increased dimensions (taken according to the line XID of fig. 11C) of a third embodiment of the invention,
Figures 12A-D show partially sectioned, top and simplified views of the third embodiment of the invention, in different operating positions;
Figures 13A-C show schematic, partially sectioned and simplified views, top and side respectively, of a further variant of a component of the third embodiment of the invention, in different positions of use.

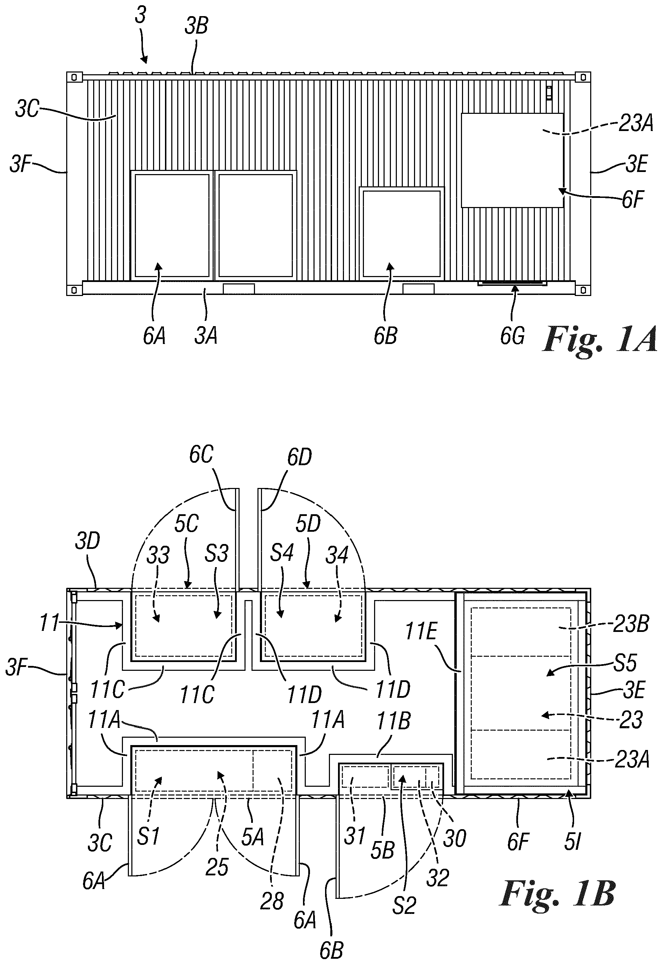

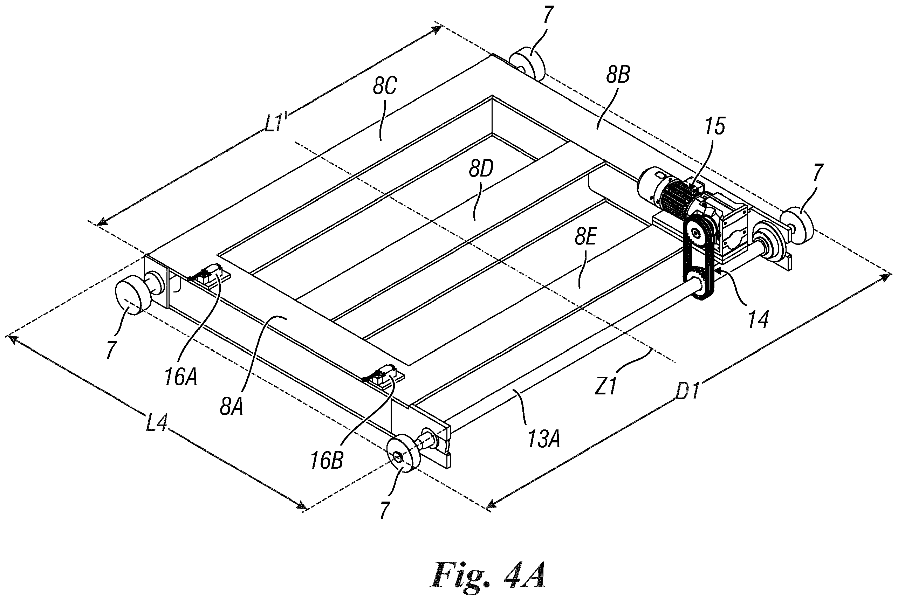

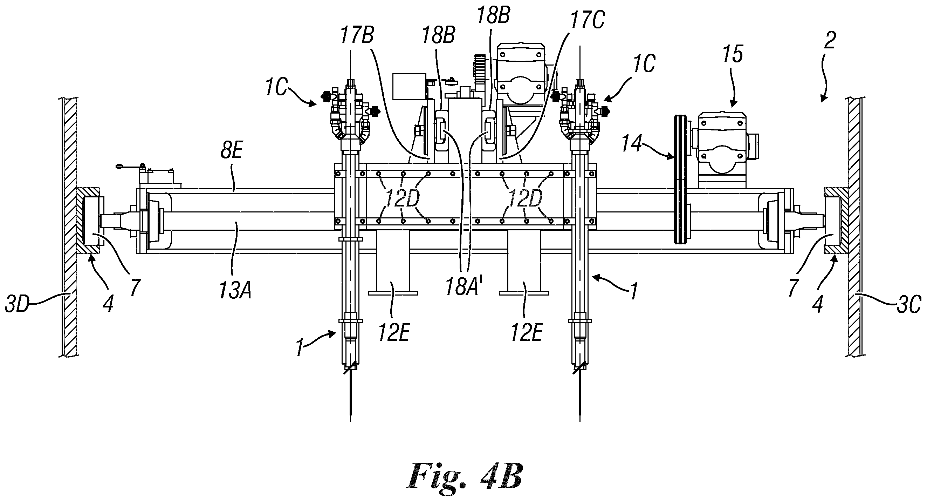

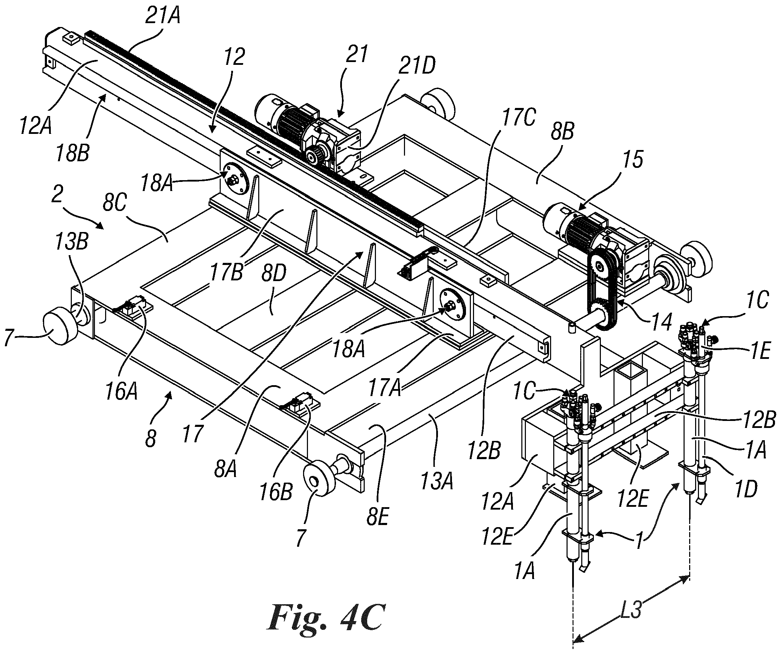

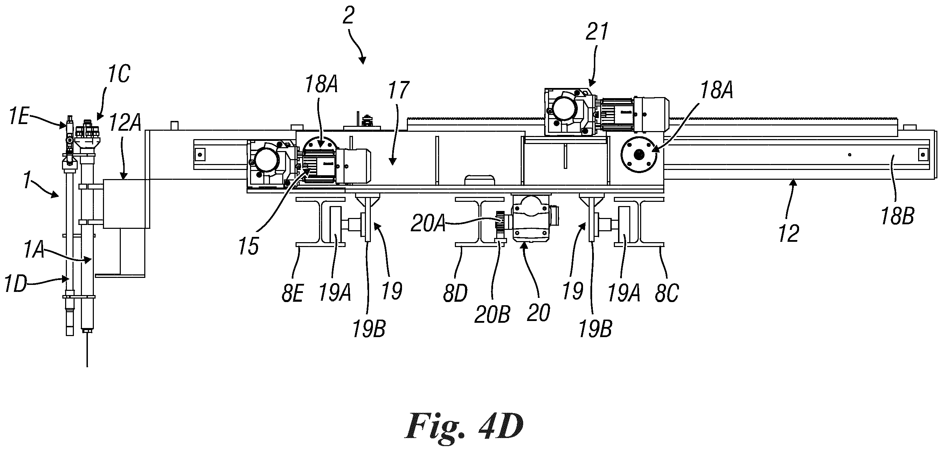

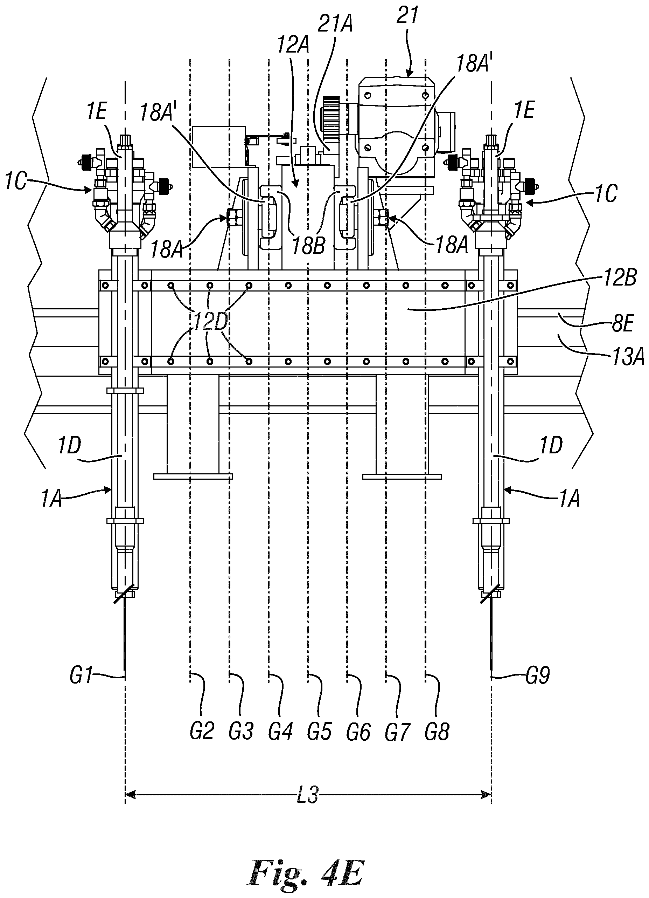

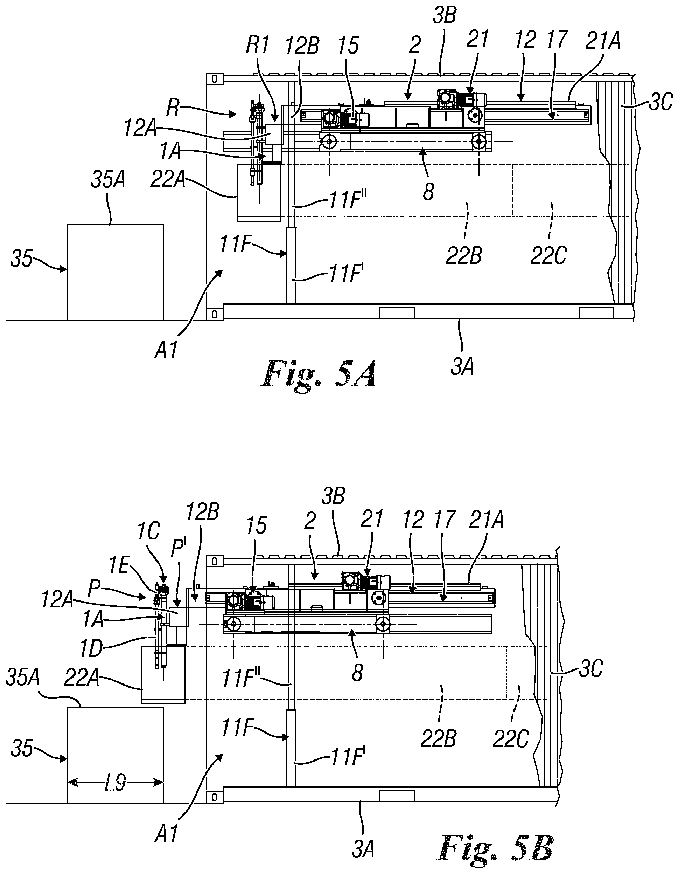

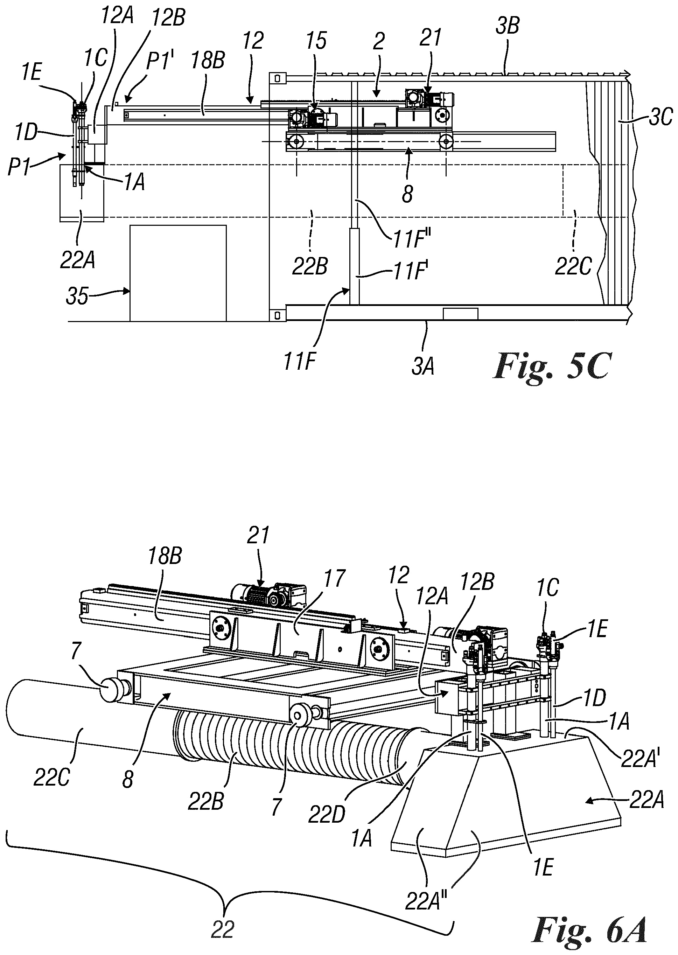

With reference to figures 1-7, they show a first embodiment of a transportable system for cutting large metal materials, in particular large scrap pieces, comprising: an oxy-fuel cutting device 1 (fig. 4), and means 2 for handling said oxy-fuel cutting device from a resting position R (fig. 5A) to at least one operating position P (figs. 5B, 5C), wherein said oxy-fuel cutting device 1 comprises at least one oxy-fuel cutting torch 1A, and wherein said handling means comprise at least one handling element 12 (fig. 4) adapted to support said at least one oxy-fuel cutting torch and adapted to position itself in a resting position R' (fig. 5A) in which said oxy-fuel cutting device is far from the material to be cut and in which the oxy-fuel cutting device cannot be activated, and at least in one operating position P' (fig. 5B) in which said oxy-fuel cutting device is located at the material to be cut and can be activated.

According to the invention, the system comprises a transportable and large-sized bearing structure 3, comprising at least one bottom wall 3A having a substantially rectangular shape, and delimiting a space S adapted to house therein at least said handling element 12 when said handling element is in a resting position R'. In figures 1-7 this bearing structure is a large-sized container 3, having a substantially parallelepiped-shaped body, comprising a bottom wall 3A, an upper wall 3B and a plurality of side walls 3C-3F, and at least one opening 3G provided in at least one of said walls, wherein said walls delimit a space S adapted to house therein at least said handling element 12 when said handling element is in a resting position R'.

Again according to the invention, the oxy-fuel cutting device 1 and the bearing structure 3 are shaped and dimensioned in such a way as to move at least one portion 12B (fig. 4C) of said handling element 12, which is adapted to carry said at least one oxy-fuel cutting torch 1A, from the inside of the bearing structure to the outside of the bearing structure and vice versa, so as to move at least said handling element from the resting R' to the operating P' position and vice versa. In figures 1-7 the oxy-fuel cutting device 1 and the bearing structure 3 are shaped and dimensioned in such a way as to move at least one portion 12B (fig. 4C) of said handling element 12, which is adapted to carry said at least one oxy-fuel cutting torch 1A from the inside of the container to the outside of the container, passing through said opening 3G of the container 3 and vice versa, so as to move at least said handling element 12 from the resting R' to the operating P' position and vice versa; and so that at least in said operating position P' the handling element 12 is adapted to support said at least one oxy-fuel cutting torch 1A.

Again according to the invention, at least in said operating position P' the handling element 12 is adapted to support the at least one oxy-fuel cutting torch 1A.

Again according to the invention, the large-sized bearing structure 3 has: a length of at least 3 m, preferably at least 6 m, more preferably at least 6.085 m, a width of at least 1.2 m, preferably at least 2.3 m, and more preferably at least 2.438 m, and if the bearing structure is in the shape of a container, as in figures 1-7, it also has a height of at least 1.2 m, preferably at least 2.3 m, more preferably at least 2.591 m.

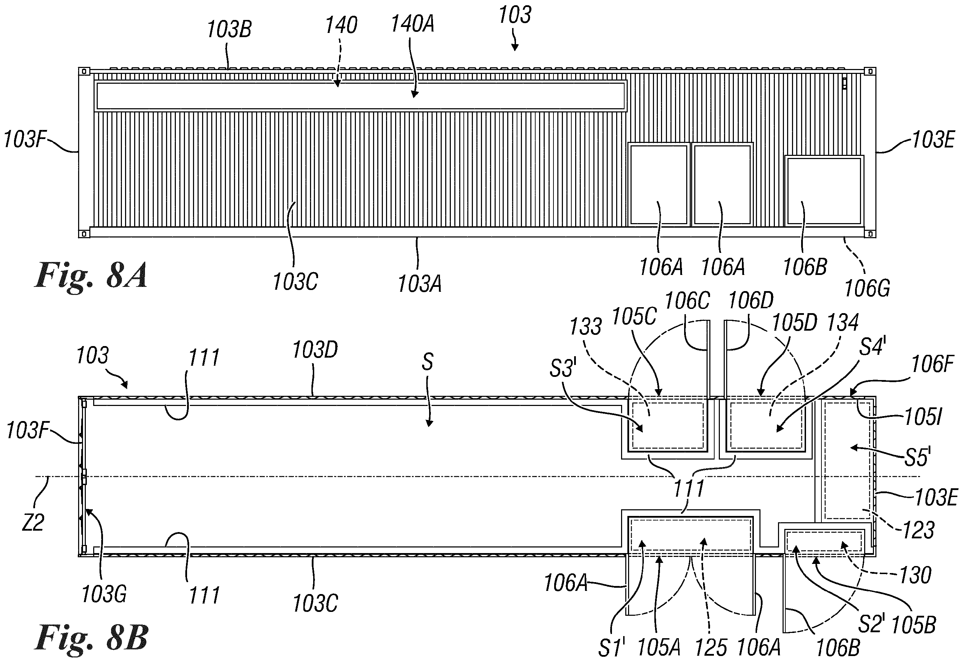

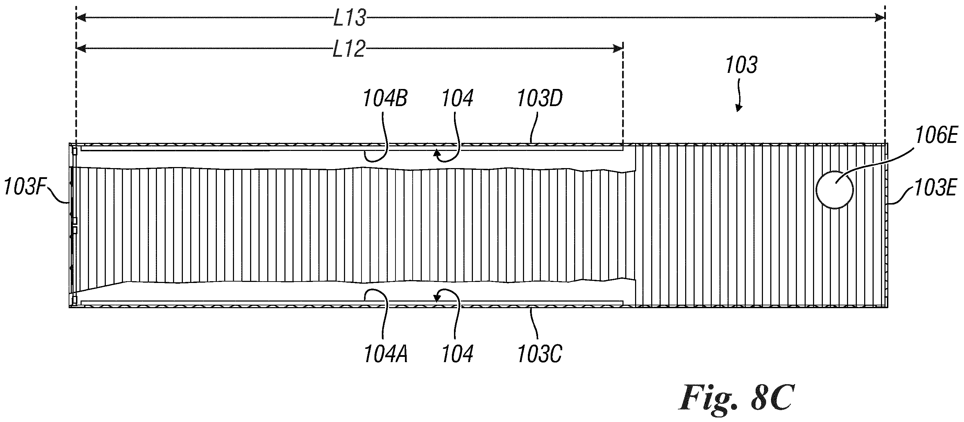

More particularly, according to a preferred embodiment of the invention the bearing structure is a standard-sized container, in particular a container having the ISO standard intermodal container sizes, of the 20-foot (figs. 1-7) or the 40-foot (fig. 8) type. According to further variants, not shown, the container 3 could also be sized as other known standard containers, for example of the 40 or 45-foot high-cube, or 48-foot or 53-foot type, or it can also have non-standard or unusual sizes, and it can be of the "flat rack" or "open top" type.

Preferably the container 3 has the same features as the 20 to 40-foot ISO standard containers (these features being of the usual type for those skilled in the art, they will therefore not be described in detail below), the four side walls 3C-3F and the upper wall 3B thereof are for example made of steel plates having the usual flat U-shaped corrugated section.

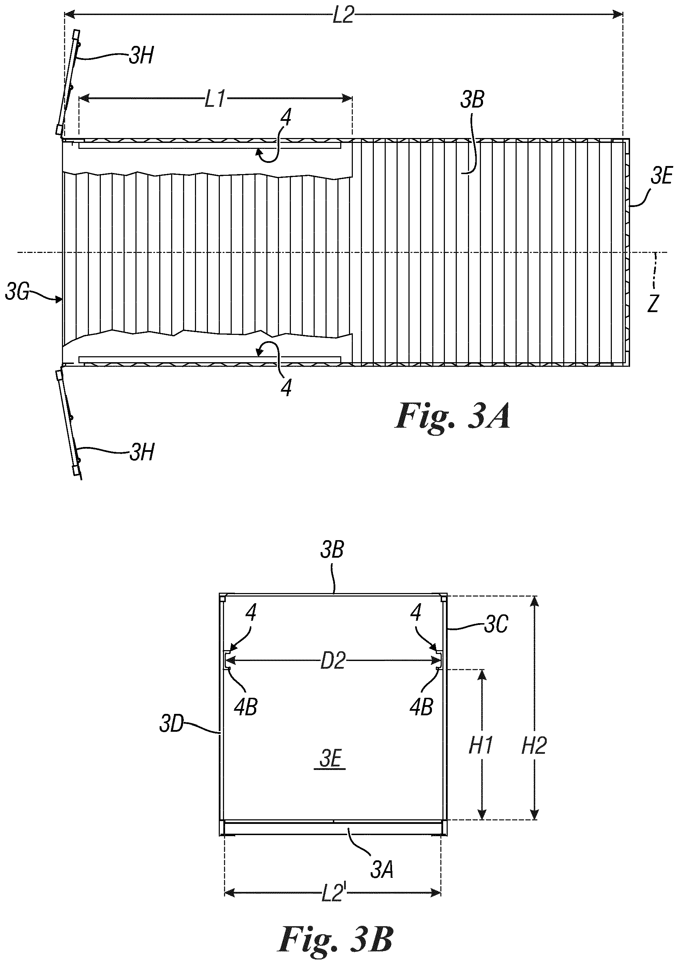

As usual in standard containers, also in the container 3 one of the side walls having smaller dimensions (in the example the wall 3F) provides two usual doors 3H (fig. 3A) which close an opening 3G which substantially extends over the entire width of the side wall 3F and allows access to the inner space S delimited by the container itself.

Preferably, the larger-sized side walls 3C and 3D and also the upper 3B and lower 3A walls provide additional openings 5A-D (fig. 1B), closed by doors 6A-D or panels 6E, 6F, 6G in addition to those provided in standard containers, the function of which will be described in detail below. It should be noted that these additional openings and the related closing doors or panels are preferably shaped and made in such a way that the container still complies with the technical features of the ISO standard containers.

Preferably the container 3 comprises first guiding elements 4 constrained to at least one of the walls 3A-F thereof, adapted to guide the means 2 for handling the oxy-fuel cutting device at least between their resting R and operating P positions.

The first guiding elements 4 adapted to guide said means 2 for handling the oxy-fuel cutting device 1 are preferably constrained inside the container to the two opposite faces of the larger-sized side walls 3C, 3D and close to the opening 3G of the container, and at a height H1 (fig. 3B), measured starting from the inner bottom wall of the container greater than 50% of the inner height H2 of the container and more preferably between 60% and 90% of this height H2 and even more preferably equal to about 65% of this height (for example the height H1 is equal to about 1.6 m).

According to variants, not shown, of the invention, the guiding elements 4 could also be shaped in a different way, for example providing only one guiding element or more than two elements, and could also be constrained to other walls of the container, for example to the upper wall or lower wall.

The guiding elements 4 can have any conventional shape for those skilled in the art adapted to support and guide a trolley 8 (described in detail below) of the oxy-fuel cutting device along a predefined path, preferably rectilinear and parallel to the longitudinal axis Z (fig. 3A) of the container, the guiding elements comprise for example two usual longitudinal rectilinear guiding profiles 4A and 4B (fig. 3B), each rigidly constrained to one of the side walls 3C 3D of the container, for example of the U-shaped section type, adapted to guide usual wheels 7, for example of the bearing type, of the trolley 8 of the handling means 2 (for example of the Hoesch Winkel profiles for roller systems), along a rectilinear path. The guiding elements have, for example, a length L1 (fig. 3A) between 30% and 70% of the overall inner length L2 of the container 3, more preferably between 40% and 60% of the length L2 and even more preferably equal to about 47% of this length L2, for example the length L1 is equal to about 2.8 m in case of a 20-foot container.

The position of the guiding elements at a certain height from the inner wall of the container and / or their length which extends only for a part of the overall length of the container, allows large free spaces to be available in the container, which spaces as described below, can be housed in such a way that other components necessary for the system according to the invention are also easily accessible.

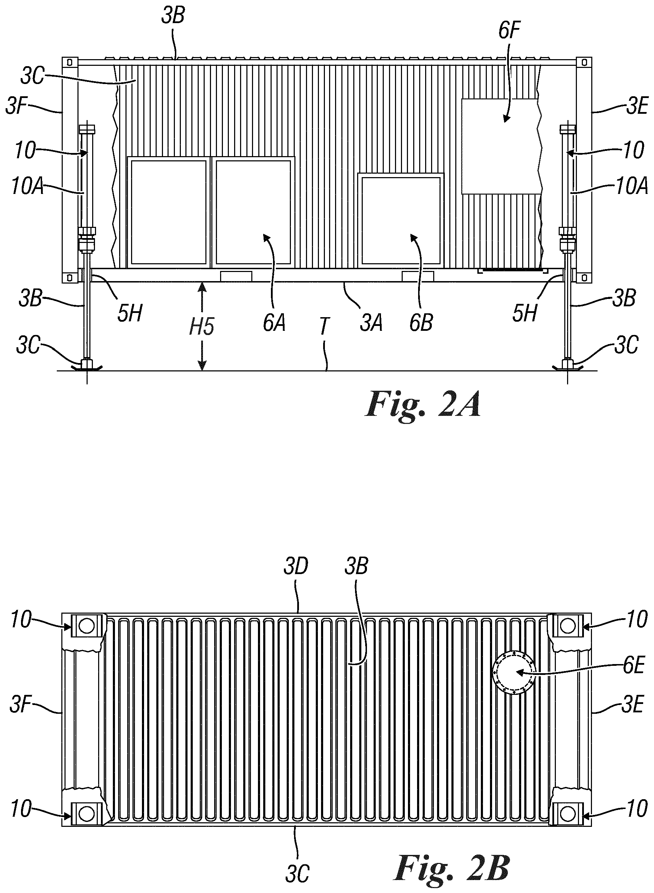

Advantageously, members 10 (figs. 2A-B) for lifting the container are provided inside the container 3, at the four corners thereof; these members 3 comprise, for example, four hydraulic cylinders (or, optionally, also electric cylinders) 10A, each rigidly constrained to one of the internal corners of the container 3, and having a stem 3B equipped with a foot 3C, in which the stem can protrude from the bottom wall 3A of the container through through openings 5H (fig. 2A) of said bottom wall, to lift the container 3 from the ground T to a height H5 (fig. 2A). Due to these lifting members 10, the container can be correctly positioned even in the presence of grounds T that are not perfectly flat and / or when the scrap pieces to be cut are in a position raised from the ground because, for example, they are housed on supports (not shown). The lifting members 10 can be in a resting position in which they are completely housed in the container 3, and in this position the through openings 5H are closed by usual caps or closing elements (not shown), or in an operating position (fig. 2A) in which the stems 3B, after removing the closing elements of the openings 5H, protrude from the bottom wall 3A of the container and lift it from the ground. The container maximum lifting height H5 is for example between 0.5 m and 1.5 m and more preferably is equal to about 1 m.

Inner walls 11 can also be provided inside the container to divide the inner space of the container into smaller spaces S 1-S6. Preferably, the walls 11 are generally usual insulating panels in particular of the type adapted to isolate from noise and dust.

More specifically, the container comprises therein:
- a first space S1 delimited and closed by the walls 11A, for housing a fluid control station (described in detail below) accessible from the outside of the container through the opening 5A provided in the side wall 3C of the container and the doors 6A;
- a second space S2 delimited and closed by the walls 11B, for housing the electric and / or control components (described in detail below), accessible from the outside of the container through the opening 5B provided in the side wall 3C of the container and the doors 6B;
- a third space S3 delimited and closed by the walls 11C, for housing a usual generator set (described in detail below), accessible from the outside of the container through the opening 5C provided in the side wall 3D of the container and the doors 6C;
- a fourth space S4 delimited and closed by the walls 11D, for housing a water cooling device (described in detail below), accessible from the outside of the container through the opening 5D provided in the side wall 3D of the container and the doors 6D;
- a fifth space S5 delimited and closed by a wall 11E, for housing a device for filtering the fumes extracted during oxy-fuel cutting (described in detail below), accessible from the outside of the container through an opening 5I (fig. 1B) provided in the side wall 3C of the container and removing the closing door 6F.

Advantageously, a further wall 11F (figs. 5A-5C) is provided inside the container, even near the opening 3G thereof from which the oxy-fuel cutting device 1 can protrude (figs. 5A-5C), to protect against noise and dust, adapted to divide the inner space of the container in two spaces A1 and A2 (fig. 5A): a first space A1 provided near the opening 3G and adapted to house the part of the cutting device which comprises the oxy-fuel torches when they are in a resting position and a space A2 which comprises all the other inner space of the container. Preferably, this wall 11F is divided into a lower part 11F' which is made of rigid panels and can also comprise a central part that can be removed to allow access to the container and an upper part 11F" made of flexible panels shaped and dimensioned in such a way as to allow handling the cutting device 1 (for example of the type comprising a curtain of the type having a plurality of distinct flexible vertical strips placed side by side).

The means 2 for handling the oxy-fuel cutting device 1 comprise a trolley 8, to which the handling element 12, hereafter also referred to as the arm 12, is connected, at an end of which a head 12A is provided to which the at least one oxy-fuel cutting torch 1A (in the figures two torches 1A are provided) is constrained.

The trolley 8 in the example comprises a plurality of usual profiles 8A-E arranged perpendicularly to each other so as to form a substantially rectangular body, and having a width L1 (fig. 4A) slightly less than the inner width L2 (fig. 3B) ) of the container, from the two outermost side profiles 8A-B the ends of usual handling shafts 13A, B which carry the wheels 7 adapted to engage with and be guided by the guiding elements 4 provided inside the container 3 branch off. The wheels 7 are spaced apart by a portion D1 (fig. 4A) substantially equal to the distance D2 (fig. 3B) between the two guides 4, so as to remain housed inside the guides themselves. The wheels 7 are, for example, of the bearing type, and are connected, for example to an idle shaft 13B and to a motorized shaft 13A, which in turn is connected through usual transmission elements 14 (for example of the chain / pinion type) to motorized means 15 (for example of the type comprising an electric motor and a reducer) adapted to handle the trolley 8 back and forth along the guiding elements 4 in the various resting and operating positions. The trolley also provides usual end-of-stroke sensors 16A and B. The trolley 8 also provides a slide 17 which carries the arm 12, comprising for example a base 17A and two opposite side walls 17B, C, the slide 17 also comprises usual rectilinear guiding elements 18A (for example associated with the side walls 17B and 17C and each comprising a bearing 18A' (fig. 4B) adapted to cooperate with corresponding counter elements 18B (for example a U-shaped guide in which the bearings 18A' of the elements 18A can rotate) provided on the arm 12, adapted to only allow a translation of the arm 12 rectilinear and parallel to the longitudinal axis Z1 (fig. 4A) of the trolley 8 (and to the longitudinal axis Z (fig. 3A of the container 3), and to prevent the arm from tilting and / or lifting with respect to the slide 17.

The slide 17 can translate only transversely, that is perpendicularly to the axis Z1 (fig.4A) of the trolley, for this purpose, the transversal profiles 8C, 8D 8E (fig.4A) of the trolley (which for example have an H-shaped section as shown in fig. 4D) act as guiding elements for counter guiding elements 19 (fig. 4D) which comprise for example wheels 19A carried by support elements 19B constrained to the base wall 17A of the slide 17. The slide 17 also comprises handling means 20 (fig. 4D) which comprise for example a usual electric motor and a pinion 20A adapted to engage with a rack 20B constrained to the central transverse profile 8D of the trolley 8.

The arm 12 can for example be a usual rectangular section profile, and provides means 21 (fig. 4C) for the handling thereof rectilinear and parallel to the longitudinal axis Z1 of the trolley, along the slide 17, which provide for example (fig. 4C) a rack 21A provided for example on an upper face 12A of the arm 12, and a pinion 21B connected to an electric motor 21B, rigidly constrained, for example by means of a bracket 21D, in turn constrained to the trolley 8, for example to its crosspiece 8C.

The head 12A of the arm 12 provides a support element 12B which extends transversely to the arm 12 and to which the oxy-fuel cutting torches 1A are constrained. The support element 12B allows one or more oxy-fuel cutting torches 1A to be constrained to the head 12A, and for this purpose it provides a plurality of fixing means 12D, for example threaded holes arranged in vertical rows and uniformly spaced transversely from each other in which they can engage screws for fixing said torches. Thanks to the fixing means 12D, if two oxy-fuel cutting torches 1A are used the distance L3 (fig. 4C) between these torches can be varied, according to the dimensions of the metal piece to be cut, and the torches can be constrained in a plurality of vertical positions G1-G9. The maximum distance between two torches 1A is for example between 1 m and 0.5 m and more preferably it is equal to about 0.7 m.

The oxy-fuel cutting torches are of the conventional type for those skilled in the art and comprise usual connecting members 1C for connecting the fluids necessary for them to operate, fed through usual pipes (discussed below). The torches 1A also comprise usual means 1D adapted to generate a pilot flame for the torches themselves, also equipped with the relative usual connecting members 1E for connecting the fluids necessary for them to operate.

By way of example, the trolley 8 has a length L4 comprised between 30% and 70% of the length L1 of the guiding elements 4 and more preferably is equal to approximately 50% of this length L1.

The head 12A of the arm 12 also comprises support elements 12E for means 22 for extracting the fumes generated during cutting, these means 22 comprise a fume extraction hood 22A, and a pipe 22B, 22C for conveying the fumes to a usual suction and filtering device 23 (schematically represented in fig. 1B).

The extraction hood 22A comprises an upper base 22A' which is constrained to the lower free ends of the support elements 12E of the head 12A of the arm 12, this upper base also provides openings for the passage of the torches 1A, the lower end of which is preferably positioned inside a space of the hood delimited by side walls 22A".

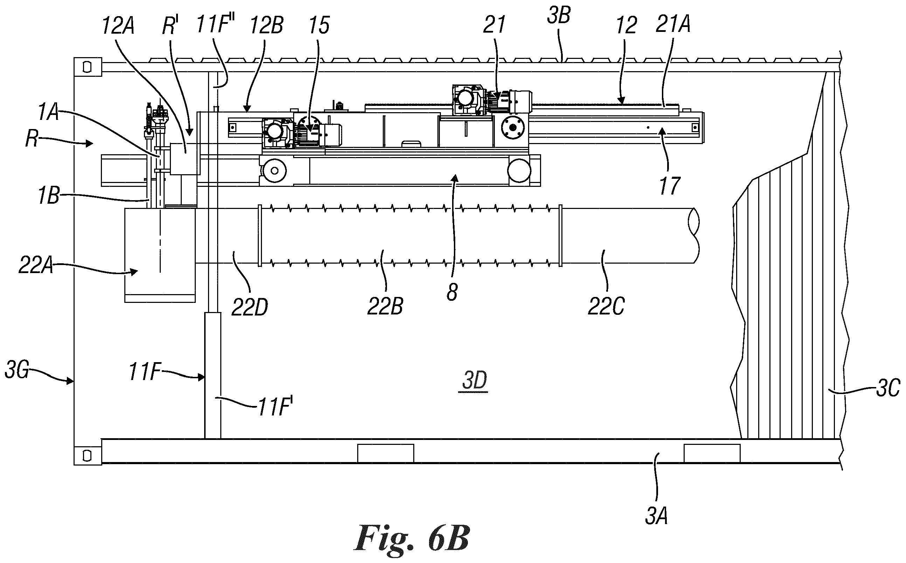

The fume conveying pipe preferably comprises a first pipe section 22B (figs. 6A and 6B), connected to the hood 22A by means of a rigid connecting element 22D, and a second section 22C connected to the suction and filtering device 23. The first pipe section 22B is preferably made of a usual flexible and extensible material (for example of the accordion or corrugated type) so as to be able to compensate for the displacements of the trolley 8 and of the torches 1A constrained to it, while the second pipe section 22C is preferably made of a usual rigid material.

The suction and filtering device 23 is of the usual type and comprises usual suction means 23B (schematically represented in fig. 1B) and a usual group of usual filters 23A (schematically represented in figs. 1A and 1B) in their turn connected above the opening 6E (fig. 2B) provided in the upper wall 3B of the container and adapted to allow the emission of the fumes filtered outside the container (in compliance with the laws in force in the country where the system is placed), and below the opening 6G (fig. 1A) provided in the lower wall 3A of the container and adapted to allow the filtered powder to be discharged outside the container 3.

As shown in figures 1A-1B, the suction and filtering device 23 is advantageously provided inside the container in the space S5 (fig. 1B) provided near the side wall 3E opposite to that in which the opening 3G of the container 3 is provided (and also delimited by the wall 11E and by the other walls of the container), and with the group of filters 23 provided at the opening 5I provided in the side wall 3C of the container, so that it can be easily replaced (completely or only partially, for example only the filter cartridges) by removing the panel 6F which usually closes this opening 5I.

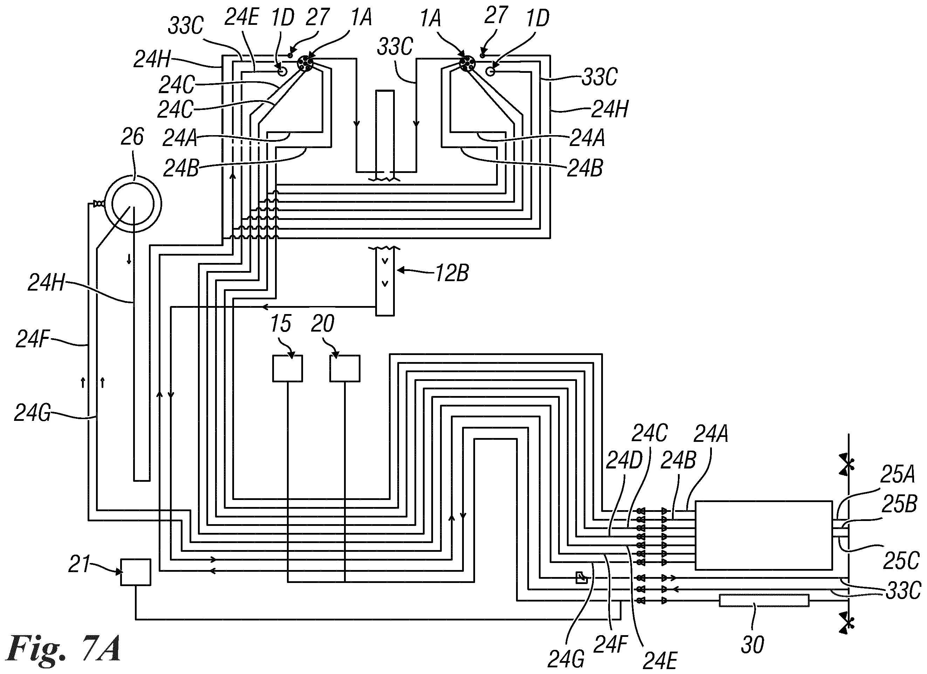

The container comprises therein a plurality of pipes 24A-E (schematically represented in Fig. 7A) connected to a fluid control station 25, adapted to feed the oxy-fuel cutting torches 1A, the means 1D for the pilot flame with the fluids necessary for them to operate. More particularly, the fluid control station 25 is of the conventional type for those skilled in the art and will therefore not be described in detail below; as usual, it provides two inlets 25A-B for feeding the two fluids necessary for oxy-fuel cutting, that is to say oxygen and gas, and provides at the outlet: two pipes 24A, B both connected to the two torches 1A and adapted to feed oxygen, and three pipes 24C-E adapted to feed gas to the two torches 1A and to the two means 1D for the pilot flame. The fluid control station 25 also provides a pipe 25C for the inlet of nitrogen or dehumidified compressed air, and two pipes 24F-G for the outlet of nitrogen or compressed air, both connected to a usual powder tank 26 which at the outlet has a pipe 24H connected to a device 27 (fig. 7A) provided near the torches 1A (adapted to feed, as usual for those skilled in the art, iron powder with a specific particle size, which is conveyed on the cutting flame to allow oxidation and therefore the cutting of all high alloys or alloys with high carbon content such as stainless steels, cast iron or other steelworks compounds that cannot otherwise be treated with an oxidation-reduction process (see Fe powder system sheet attached separately).

The pipes 24A-G are of the conventional type for those skilled in the art and are provided inside the container and are shaped and dimensioned in such a way as to reach and be connected to the connecting members 1C (fig. 4C) and 1E of the oxy-fuel cutting torches 1A and of the means for the pilot flame 1D and allow the handling of the oxy-fuel cutting device 1 between its various operating positions.

The powder tank 26 is also advantageously provided in the container 3, for example inside the seat S1 (fig. 1B) which is advantageously accessible also or only from the outside of the container through the opening 5A, provided in the side wall 3C of the container 3 once the closing doors 6A of said opening have been opened.

The fluid control station 25 is also housed inside the container 3 and is preferably housed inside the dedicated seat S1 (fig. 1B) which is advantageously accessible also or only from the outside of the container through the opening 5A, provided in the side wall 3C of the container 3 once the closing doors 6A of said opening have been opened.

Advantageously, the seat S1 which houses the fluid control station 25 also houses one or more usual hose-reel devices 28 comprising a hose for connecting the inlets 25A-C of the station 25 with sources of oxygen, and / or gas, and / or nitrogen provided outside and at a certain distance from the container 3. Thanks to the housing of the fluid control station in a dedicated seat S1, which is preferably a closed and isolated seat with respect to the part of the container that houses the oxy-fuel cutting device 1, the station 25 is protected from the cutting residues and at the same time, however, also easily accessible from the outside of the container. Furthermore, the fluid control station being provided in the container 3 makes the use of the system extremely practical and fast, since the fluids necessary for it to operate only have to be connected to the system inlets 25A-C for operating it.

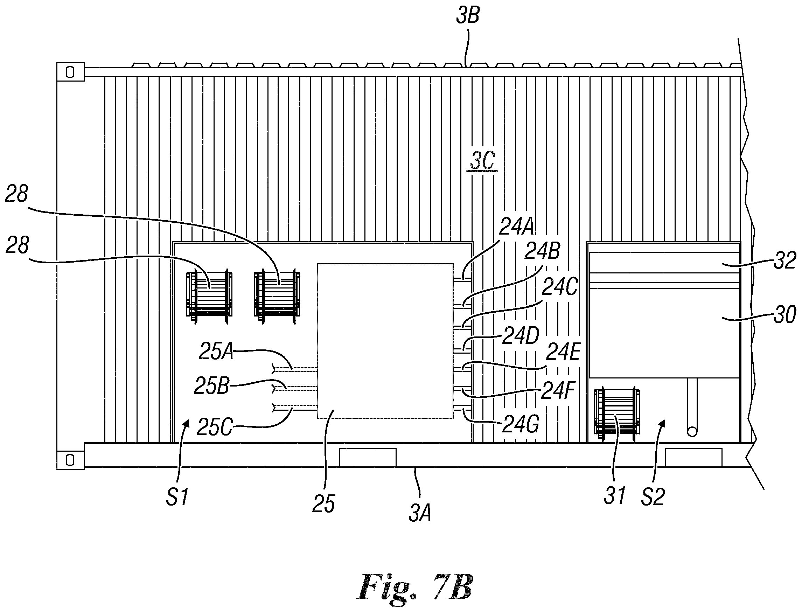

The container comprises therein a plurality of electric cables 29A-C (fig. 7A) adapted to power the electric motors of the handling means 15, 20, 21 provided on the trolley 8 and on the slide 17, these cables are provided at the outlet of a power station 30 (fig. 7B) fed for example through an electric cable of a conventional hose-reel device 31, which allows to connect the station 30 with a suitable power socket outside the container 3. All the other usual components of the oxy-fuel cutting device which require an electric power supply conventional for those skilled in the art are also connected to the power station 30 by means of suitable electric cables (not shown).

The power station 30, and preferably also the hose-reel device 31 are housed inside the container 3 and are preferably housed inside the dedicated seat S2 (fig. 1B) which is advantageously accessible also or only from the outside of the container through the opening 5B provided in the side wall 3C of the container 3 once the closing door 6B of said opening has been opened. Thanks to the housing of the power station 30 in a dedicated seat S3, which is preferably a seat closed and isolated from to the part of the container which houses the oxy-fuel cutting device 1, the station 30 is protected from cutting residues and at the same time, however, it can also be easily accessible from the outside of the container. Furthermore, the power supply station being provided in the container 3 and being already connected to all the cables necessary for the system to operate makes the use of the system extremely practical and fast, since it is only necessary to connect its input to an external power source for it to be operated.

A system command and control unit 32, described in greater detail below, is also preferably housed in the seat S3.

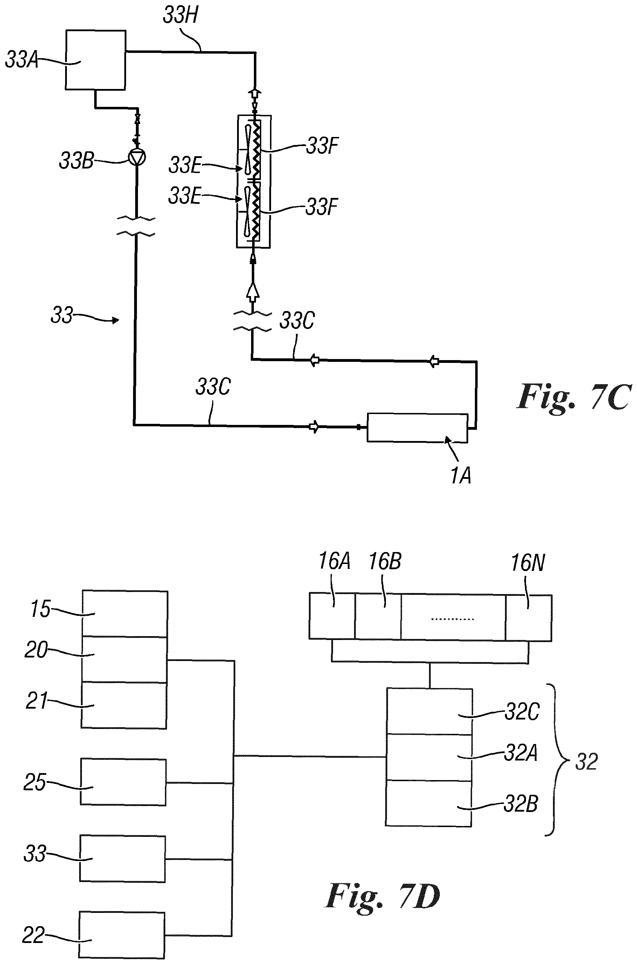

The container also preferably comprises means 33 (Fig. 7C) for cooling the oxy-fuel cutting torches 1A, these means are also of a conventional type for those skilled in the art and comprise for example a tank 33A of the cooling liquid, a pump 33B and piping 33C for delivering the cooling liquid to the oxy-fuel cutting torches 1A, devices 33D for cooling the liquid heated by torches 1A (for example of the heat exchanger type 33E and with a cooling fan 33F) and return piping 33G, 33H for returning the cooling liquid to the tank 33A.

The cooling means 33 are advantageously housed inside the container 3 and are preferably housed inside the dedicated seat S3 (fig. 1B) which is advantageously accessible also or only from the outside of the container through the opening 5C provided in the side wall 3D of the container 3 once the closing door 6C of said opening has been opened. Thanks to the housing of the cooling means 33 in a dedicated seat S3, which is preferably a closed and isolated seat with respect to the part of the container which houses the oxy-fuel cutting device 1, these means 33 are protected from cutting residues and at the same time they are, however, also easily accessible from the outside of the container, for example for filling or topping up the cooling liquid in the relative tank 33A. Furthermore, the cooling means 33 being provided in the container 3 and the container also including therein all the pipes and cables necessary for cooling makes the use of the system extremely practical and fast, since only checking and, if necessary, filling the tank 33A with the liquid required for cooling is needed for it to be operated.

Advantageously, the container also includes current generating means 34, of the usual type for those skilled in the art, and adapted to generate the electric current necessary for operating the system, if, for example, it is not possible to connect the power station 30 to an electrical power source outside the container or in the event of a momentary power cut. The current generating means 34 comprise electric cables (not shown) housed inside the container and for connection to the power station 30. The current generating means 34 are advantageously housed inside the container 3 and are preferably housed inside the dedicated seat S4 (fig. 1B) which is advantageously accessible also or only from the outside of the container through the opening 5D provided in the side wall 3D of the container 3 once the closing door 6D of said opening has been opened. Thanks to the housing of the generating means 34 in a dedicated seat S4, which is preferably a closed and isolated seat with respect to the part of the container which houses the oxy-fuel cutting device 1, these means 34 are protected from cutting residues and at the same time they are also easily accessible from the outside of the container, for example for filling or topping up the fuel required for the generator. In addition, the generating means 34 being provided in the container 3 and the container also including therein all the cables necessary to transfer the generated electricity makes the use of the means 34 extremely practical and fast.

The transportable system according to the invention also includes a command and control unit 32 for commanding and controlling all the components of the system. This command and control unit is of a type which is substantially similar to the corresponding command and control units provided in the fixed oxy-fuel cutting machines of the usual type, and will therefore not be described in detail below, it being of a conventional type for those skilled in the art. As schematically represented in fig. 7D, the command and control unit can provide one or more interfaces 32 A, B to provide the unit itself with the necessary operating instructions, such as the dimensions and / or characteristics and / or positioning of the scrap piece to be cut. The interfaces 32A and B are preferably of the type connected wirelessly with a fixed part 32C of the control unit provided in the container, so as to make the system easier and more immediate to control and to be able to control the system even from a certain distance from the container.

The command and control unit is advantageously of the microprocessor type and provides a usual software to command and control the operation of the various system components. For this purpose the command and control unit 32 is connected (as shown schematically in fig. 7C), for example:
- with the handling means 15, 21, 20 of the trolley 8 and of the slide 17, so as to command and control the movement of the oxy-fuel cutting torches from the resting position R to the operating position P at the beginning of the cut and then during the cut,
- with the fluid feeding station 25 to feed to the oxy-fuel torches 1A, the means 1D for the pilot flame and the powder tank 26 with the necessary fluids and the correct quantities,
- with the cooling means 33, to control the working temperature of the oxy-fuel torches 1A,
- with the suction means 22 for extracting the fumes generated during cutting,
- and with all the usual control or detection sensors 16A-N provided on the various devices or members of the system (for example with the position sensors 16A, B of the trolley 8). Also the members 10 (fig. 2A-B) for lifting the container could be controlled through the control unit 32.

The operation of the system according to the invention provides:
a) transporting the container 3 to the place where large metal materials, in particular large scrap pieces, should be cut into smaller pieces,
b) adjusting the height H5 (fig. 2B) of the container from the ground, by acting on the lifting devices 10,
c) opening the doors 3H of the container 3 in order to open the opening 3G of the container and allow the handling of the oxy-fuel torches 1A even outside the container,
d) handling the oxy-fuel cutting torches 1A from a resting position R (fig. 5A), in which they are provided inside the container 3, to a cutting start position P (fig. 5B) in which they are provided above the scrap piece 35 to be cut, and with the lower edge of the extraction hood 22A, if present, immediately above (for example at a distance between 1 cm and 50 cm) from the upper face 35A of the scrap 35 to be cut,
e) the oxy-fuel cutting torches 1A are then moved along the entire width L9 of the scrap piece 35 until they are in a cutting end position P1 (fig. 5C) in which they are no longer above the scrap piece, during the cutting procedure the suction means 22 are also activated,
f) the cutting torches 1 are then brought back inside the container to the resting position R or to the cutting start position P if another cut is to be made.

As shown in Figures 5B and 5C, preferably, the trolley 8 is first brought to an end-of-stroke position and closer to the opening 3G of the container with the arm 12 which has not yet been moved (fig. 5B), and in this position the torches are in the cutting start position P, if necessary a further transverse positioning of the torches is carried out by acting on the handling means 20 (fig. 4B) of the torches transversely to the trolley 8 (and consequently also to the scrap piece to be cut), then the arm 17 is also handled, so as to bring the torches to the cutting end position P1 (fig. 5C).

Figures 8-10 show a second embodiment of a system according to the invention, the parts in common with the previously described embodiment will not be further described and will be described below and in the relative figures indicated with the same numerical references used for the first embodiment, however, increased by 100.

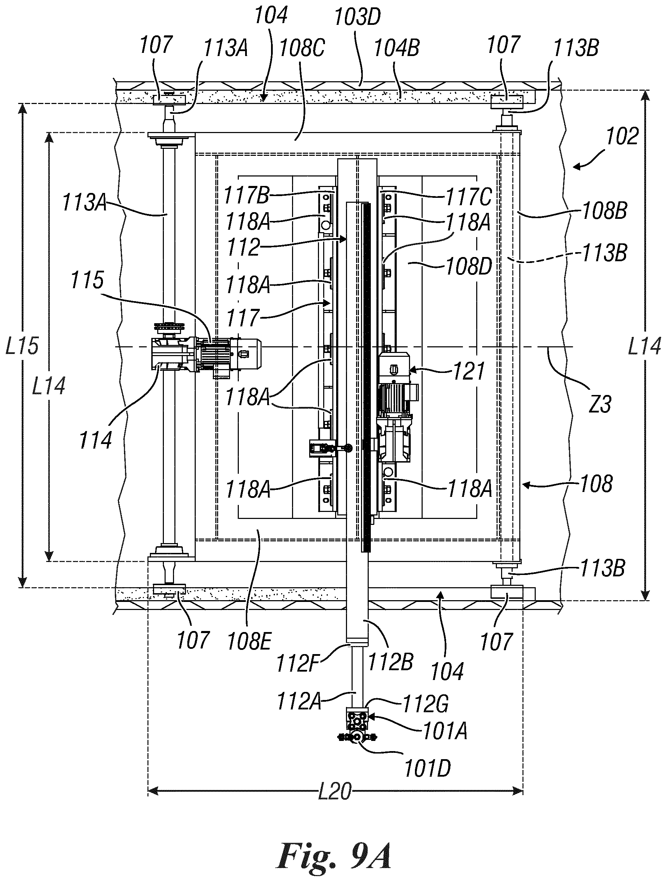

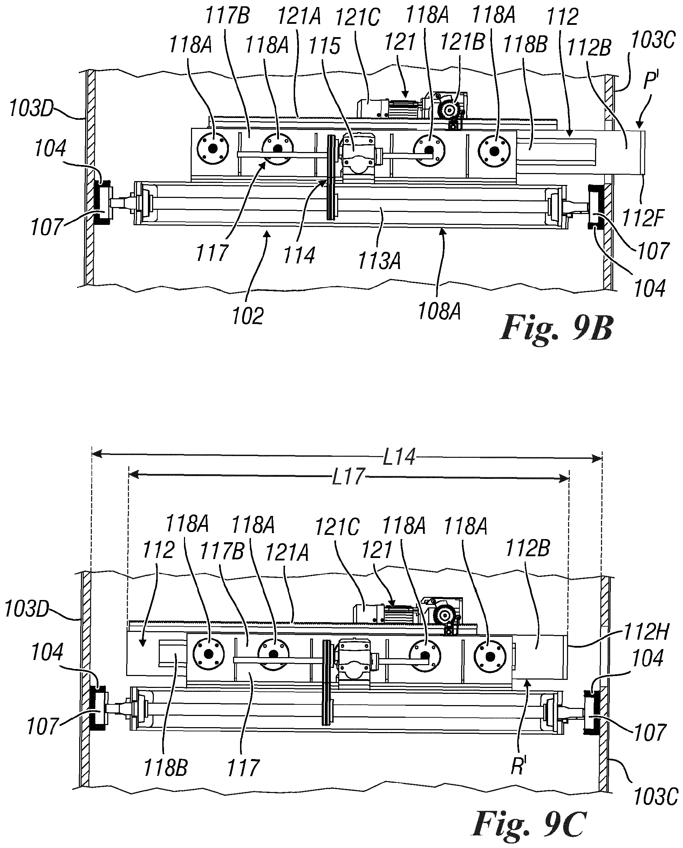

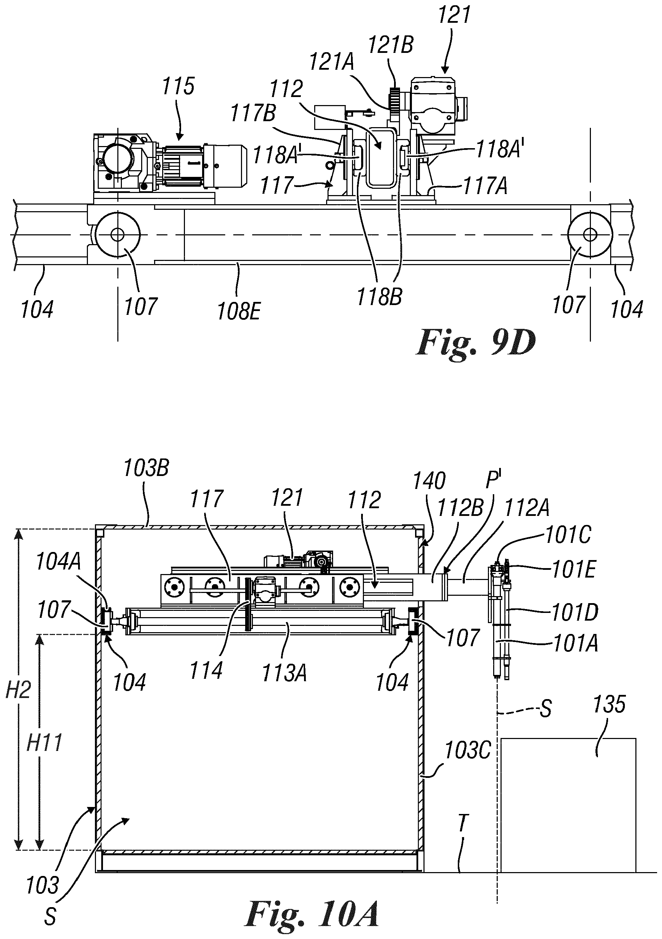

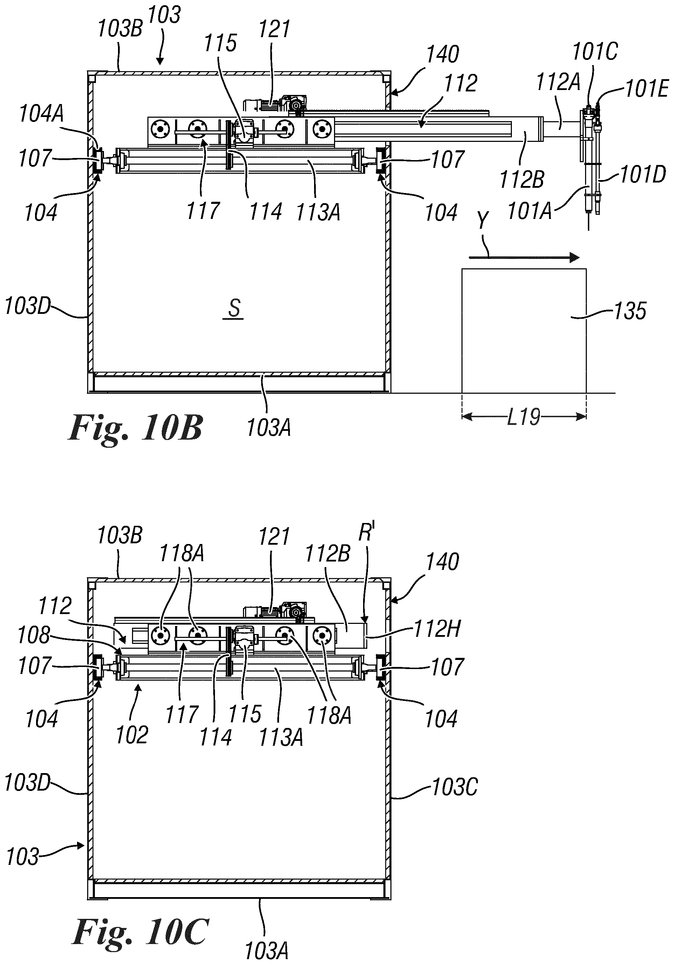

The system according to this second embodiment comprises, like the previous one:
an oxy-fuel cutting device 101 (fig. 9A), comprising at least one oxy-fuel cutting torch 101A, and means 102 for handling said oxy-fuel cutting device from a resting position R' (fig. 10A) to at least one operating position P' (fig. 10B), in which said handling means 102 comprise at least one handling element 112 (fig. 10C) adapted to support said at least one oxy-fuel cutting torch and adapted to position itself in a resting position R' (fig. 10C) in which said oxy-fuel cutting device is distant from the material to be cut and in which the oxy-fuel cutting device cannot be activated and in at least one first operating position P' (fig. 9B, 10B) in which said oxy-fuel cutting device is placed at the material to be cut and can be activated.

Also according to this second embodiment, the system comprises a bearing structure which in the embodiment in question is a container 103 which in one of its larger side walls 103C has a dedicated opening 140 (fig. 8A, 10A) for handling at least the portion 112B of the handling element 112 in its positions R' and P'. The container 103 also has a substantially parallelepiped-shaped body, comprising: a bottom wall 103A, an upper wall 103B and a plurality of side walls 103C-F, which delimit a space S adapted to house therein at least the handling element 112 when said handling element is in the resting position R'.

Also according to this variant, the oxy-fuel cutting device 101 and the container 103 are shaped and dimensioned in such a way as to move at least one portion 112B (fig. 10C) of said handling element 112, adapted to carry said at least one oxy-fuel cutting torch 100A, from the inside of the container to the outside of the container passing through said opening 140 of the container 103 and vice versa, so as to bring at least said handling element 112 from the resting position R' to the operating position P' and vice versa, and so that at least in said operating position P' the handling element 112 is able to support said at least one oxy-fuel cutting torch 101A.

According to a first embodiment, the large-sized container 103 has: a length of at least 6 m, preferably at least 12 m, more preferably at least 12.192 m, a width of at least 1.2 m, preferably at least 2.3 m, more preferably at least 2.438 m, and a height of at least 1.2 m, preferably at least 2.3 m, more preferably at least 2.591 m.

The container 103 could however also have smaller dimensions, for example the same as the container previously described, that is a length of at least 3m, preferably at least 6 m, more preferably at least 6.085 m, a width of at least 1.2 m, preferably at least 2.3 m, more preferably at least 2.438 m, and a height of at least 1.2 m, preferably at least 2.3 m, more preferably at least 2.591 m.

The large-sized container 103 according to this variant according to a further preferred embodiment of the invention is a standard-sized container, and advantageously it is a container having the ISO standard intermodal container sizes, of the 40-foot type and according to a further (less preferred) variant of the 20-foot type. According to further variants not shown, the container 103 could also be sized like other known standard containers, for example of the 40 or 45-foot high-cube type, or 48-foot or 53-foot, or also have non-standard or uncommon dimensions, and also be of the "flat rack" or "open top" type.

Preferably the container 103 has the same features as the ISO standard containers from 20 to 40 feet (these features being of the usual type for those skilled in the art will therefore not be described in detail below).

As usual in standard containers, one of the smaller side walls (in the example the wall 103F) provides two usual doors (not shown) which close an opening which substantially extends over the whole width of the side wall 103F and which allows access to the inner space S delimited by the container.

Preferably, the larger side walls 103C and 103D and also the upper 103B and lower 103A walls, also have the additional openings 105A-D (fig. 8B) closed by additional doors 106A-D or panels 106E, 106F, 106G with respect to those provided for in standard containers, the function of which will be described in detail below. It should be noted that these additional openings and the related closing doors or panels are preferably shaped and made in such a way that the container still complies with the technical features of ISO standard containers.

Preferably, the container 103 also comprises first guiding elements 104, constrained to at least one of its walls 103A-F, adapted to guide the means 102 for handling the oxy-fuel cutting device 101, in a plurality of possible operating positions.

The first guiding elements 104 adapted to guide the means 102 for handling the oxy-fuel cutting device 101 are preferably constrained inside the container to the two opposite faces of the larger side walls 103C, 103D, and at a height H11 (fig. 10A), measured starting from the inner face of the bottom wall 103A of the container greater than 50% of the inner height H12 of the container and more preferably between 60% and 90% of this height H12 and even more preferably equal to approximately 65% of this height (for example the height H11 is approximately 1.6 m).

According to variants not shown of the invention, the guiding elements 104 could also be shaped in a different way, for example providing only one guiding element or more than two elements, and could also be constrained to other walls of the container, for example to the upper or lower wall.

The guiding elements 104 can have any conventional shape for those skilled in the art adapted to support and guide a trolley 108 (described in detail below) of the oxy-fuel cutting device, along a predefined path, preferably rectilinear and parallel to the longitudinal axis Z2 (Fig. 8B) of the container, the guiding elements are for example of the same type described with reference to the guiding elements 4 and are adapted to guide usual wheels 107, for example of the bearing type, of the trolley 108 of the handling means 102 for handling the cutting device 101, along a rectilinear path.

The guiding elements, in the case of a 40-foot container, have for example a length L12 (fig.8C) comprised between 30% and 80% of the overall inner length L12 of the container 103, more preferably between 40% and 70% of the length L13 and even more preferably equal to about 66% of this length L13, for example the length L11 is equal to about 8.10 m. Advantageously, also inside the container 103, at the four corners thereof, members (not shown) are provided for lifting the container, of a type similar to those previously described.

Inside the container, inner walls 111 can also be provided to divide the inner space of the container into smaller spaces S1'-S6'. The walls 111 are preferably usual insulating panels, in particular of the type adapted to insulate against noise and dust.

The spaces S1'-S6' are substantially identical to those already described for the previous embodiment (except for a different positioning and / or sizing), and will not be further described below.

The means 102 for handling the oxy-fuel cutting device 101 comprise the trolley 108, to which the handling element 112, hereinafter also referred to as the arm 112, is connected, at one end of which a head 112A is provided to which the at least one oxy-fuel cutting torch 100A is constrained.

The trolley 108 comprises for example a plurality of usual profiles 108A-E arranged perpendicularly to each other so as to form a body having a substantially rectangular shape, and having a width L14 (fig. 9A) slightly less than the inner width L15 of the container; from the two outermost side profiles 108C and E the ends of usual shafts 113A, B 13A, B which carry the wheels 107 adapted to engage with and be guided by the guiding elements 104 provided inside the container 3 branch off, as described for the previous embodiment. The wheels 107 are, for example, of the bearing type, and are connected, for example to an idle shaft 113B and to a motorized shaft 113A, which in turn is connected through usual transmission elements 114 (for example of the chain / pinion type) to motorized means 115 (for example of the type comprising an electric motor and a reducer) adapted to move the trolley 108 back and forth along the guiding elements 104 in the various desired positions. The trolley 108 also provides a slide 117 carrying the arm 112, comprising for example a base 117A and two opposite side walls 117B, C, the slide 117 also comprises usual rectilinear guiding elements 118A (for example associated with the side walls 117B and 117C and each comprising, for example, a bearing, adapted to cooperate with corresponding counter elements 118B (for example a U-shaped guide in which the bearings of the elements 118A can rotate) provided on the arm 112, adapted to allow only a translation of the arm 112 rectilinear and perpendicular to the longitudinal axis Z1 (fig. 9A) of the trolley 118 (and to that Z (fig. 8B of the container 103), and prevent the arm from tilting and / or lifting with respect to the slide 117.

According to the variant in question, the slide 117 is preferably fixed and stably constrained to the trolley 118.

The arm 112 can for example be a usual rectangular section profile, and provides means 121 (fig. 9A) for its handling rectilinear and perpendicular to the longitudinal axis Z3 (fig. 9A) of the trolley, along the slide 117, which provide for example (fig. 9A) a rack 121A provided for example on an upper face of the arm 112, and a pinion 121B (fig. 9B) connected to an electric motor 121C, rigidly constrained in turn to the trolley 108, for example to the its crosspiece 108D.

The head 112A of the arm 112 has, for example, an elongated shape and provides first usual connecting means 112F (fig. 9A) adapted to constrain the head, for example by means of bolts, to the end 112H (fig. 9C) of the portion 112B of the arm 112, and second usual connecting means 112G, for example of the bolt type, adapted to constrain the torch 101A (or even more than one torch) to the head 112A.

Preferably, according to this variant, the movement element 112 (also called arm 112) has an overall length L17 (fig. 9C) less than the inner width L14 (fig. 9C) of the container 103 so that when in a resting position R' (fig. 9C, 10C), and when neither the head 112A nor the torch 101A are constrained to it, it can be completely housed inside the container (as shown in fig. 9C and 10C). The length L17 of the handling element 112 is preferably between 50% and 98% of the width L14 of the container, more preferably it is between 70% and 95% of L14 and more preferably it is equal to 90% of L14, and in any case it is length such that the handling element 112 can be moved to a first operating position P' thereof (fig. 9A) in which at least one of the end portion 112B thereof protrudes outside the container 103 passing through the opening 140 provided in the container. In this first operating position P' the head 112B, to which in turn the torch 100A can be constrained (as shown in fig. 10A), can be constrained to the free end of the portion 112B of the element 112.

The oxy-fuel cutting torch 100A and the means 100D for the pilot flame are identical to those previously described.

Means (not shown) for the suction of the fumes generated during cutting, of a type similar to those previously described, comprising an extraction hood and a pipe for conveying the fumes to a usual suction and filtering device 123 (schematically represented in Fig. 8B) also of a type similar to that previously described, can also be associated with the head 112A of the arm 112 when it is in the first operating position P1 (fig. 10A).

As shown in figure 8B, the suction and filtering device 123 is advantageously provided inside the container 103 in the space S5 in a substantially similar way to that previously described.

The container comprises therein a plurality of pipes similar to what previously described connected to a fluid control station 125, adapted to supply the oxy-fuel cutting torch 100A, the means 100D for the pilot flame with the fluids necessary for them to operate. The fluid control station 125 is for example of the type previously described.

The fluid supply pipes are of a conventional type for those skilled in the art and are provided inside the container and are shaped and dimensioned in such a way as to reach and be connected to the connecting members 101C and 101E of the oxy-fuel cutting torch 100A and of the means for the pilot flame 101D and to allow the oxy-fuel cutting device 101 to be handled between its various operating positions.

The fluid control station 25, like the previous embodiment, is preferably housed inside the container 103 and is preferably housed inside the dedicated seat S1' which is advantageously accessible also or only from the outside of the container through the opening 105A, provided in the side wall 103C of the container 103 once the closing doors 106A of said opening have been opened.

The container, like the previous embodiment, comprises therein a plurality of electric cables adapted to power the electric motors of the handling means 115, 120 provided on the trolley 108 and on the slide 117, these cables are provided at the outlet of a power station 130 (fig. 8B). All the other usual components of the oxy-fuel cutting device that require a conventional power supply for those skilled in the art are connected to the power station 130 by means of appropriate electrical cables (not shown).

The power station 130 is preferably housed inside the container 103 and is preferably housed inside the dedicated seat S2' (fig. 1B) which is advantageously accessible also or only from the outside of the container through the opening 105B provided in the side wall 103C of the container 103 once the door 106B for closing said opening has been opened. A command and control unit of the system, of the type described above, is preferably also housed in the seat S3'.

The container preferably also comprises therein means 133 (Fig. 8B) for cooling the oxy-fuel cutting torches 100A, of the type described above.

The cooling means 133 are preferably housed inside the container 103 and are preferably housed inside the dedicated seat S3' (fig. 8B) as previously described.

Advantageously, the container also has current generating means 134 therein, of the type previously described and comprising electric cables (not shown) housed inside the container and for connection with the power station 130. The current generating means 134 are preferably housed in the container 103 and are preferably housed inside the dedicated seat S4' (fig. 8B) as previously described.

Even the transportable system according to this variant also comprises a command and control unit for commanding and controlling all the components of the system of the type previously described.

The operation of the system according to the variant in question provides:
a) transporting the container 3 to the place where large metal materials, in particular large scrap pieces, should be cut into smaller pieces,
b) adjusting, if any, the height of the container from the ground, by acting on the lifting members 10,
c) handling (manually or by means of conventional handling members not shown, for example of the electromechanical and / or pneumatic and / or hydraulic type) the panel 140A (fig.8A) which covers the opening 140 of the side wall 103C of the container so as to open the opening 140 of the container and allow to handle the handling element 112 also outside the container (as shown in Fig. 9A), that is to handle it from its resting position R' (Fig. 9C, 10C), and when neither the head 112A nor the torch 100A are connected thereto, to a first operating position P' (fig. 9A) in which at least one of the end portion 112B thereof protrudes outside the container 103 passing through the opening 140 provided in the container itself;
d) connecting in this first operative position P' the head 112B to which the torch 100A is in turn connected (as shown in fig. 10A) to the free end of the portion 112B so that the torch is located at the above the scrap piece 35 to be cut,
e) then handling the trolley 108 so as to position the handling element 112 and consequently also the oxy-fuel cutting torch 100A in the position in which the scrap piece 135 is to be cut transversely, and then the handling element 112 is handled to lift the oxy-fuel cutting torch transversely to the scrap piece 135 (in the direction of the arrow Y in fig. 10B) over the entire width L19 of the scrap piece 135 until the torch is in a cutting end position P1' (fig. 10B) in which it is no longer above the scrap piece, during the cutting procedure the suction means, if present, are also activated.
f) then bringing the cutting torches 1 back to the position P1' (fig. 10A) and if necessary handling the trolley 108 to make another cut.

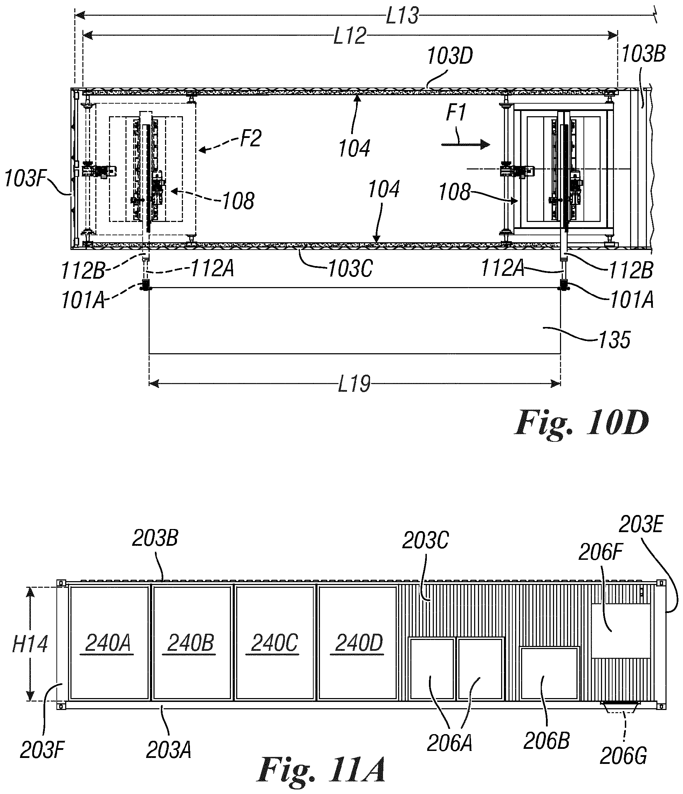

As highlighted in fig. 10D thanks to the fact that the guides 104 extend for a significant length L12, for example for at least 30% of the overall length L13 of the container, more preferably for at least 50% and even more preferably for at least 60% (for example for a 40-foot container for a length of at least 6 m) thanks to the embodiment in question it is possible to cut scrap pieces 135 having equally significant lengths L19. The fig. 10D shows the trolley 108 in the two end-of-stroke positions F1 and F2, the trolley being able to be positioned in any position between these end-of-stroke positions in order to be able to cut transversely and also longitudinally the underlying scrap piece 135.

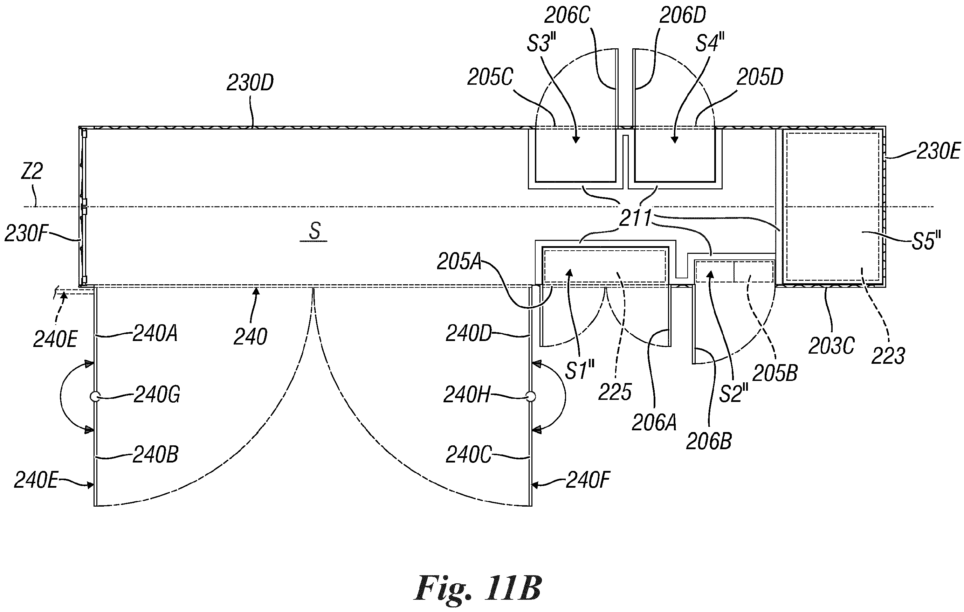

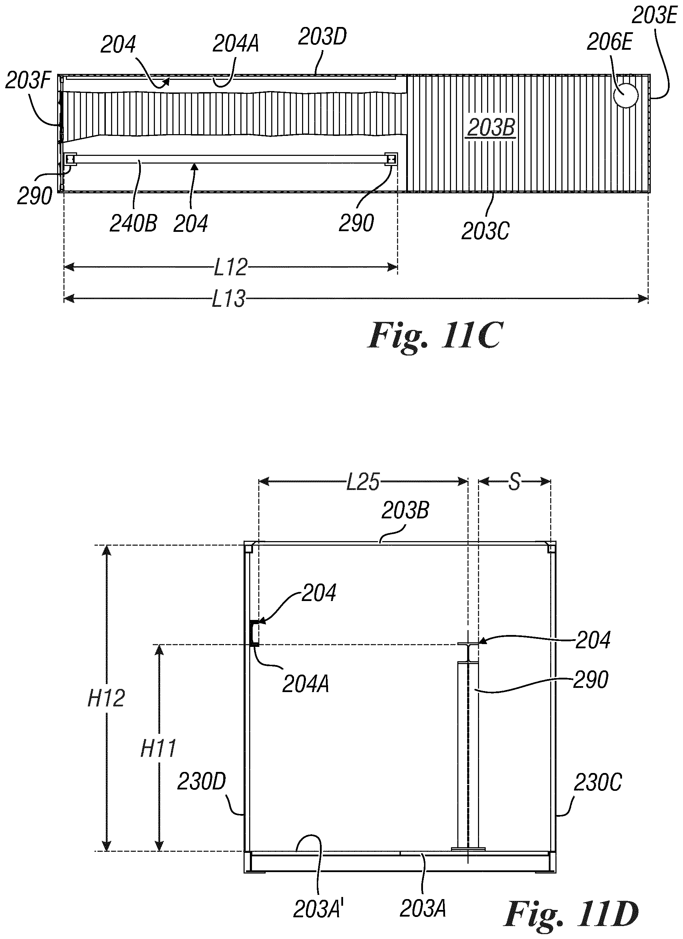

Figures 11-13 show a third embodiment of the invention, similar to the one previously described with reference to Figures 8-10, the parts in common with the two previously described embodiments will not be further described and will be referred to below and in the relative figures with the same numerical references used for the first or second embodiment, however increased by 200 (with respect to the first embodiment) and by 100 with respect to the second embodiment, these parts in common are therefore understood as described and present in the third abovementioned embodiment.

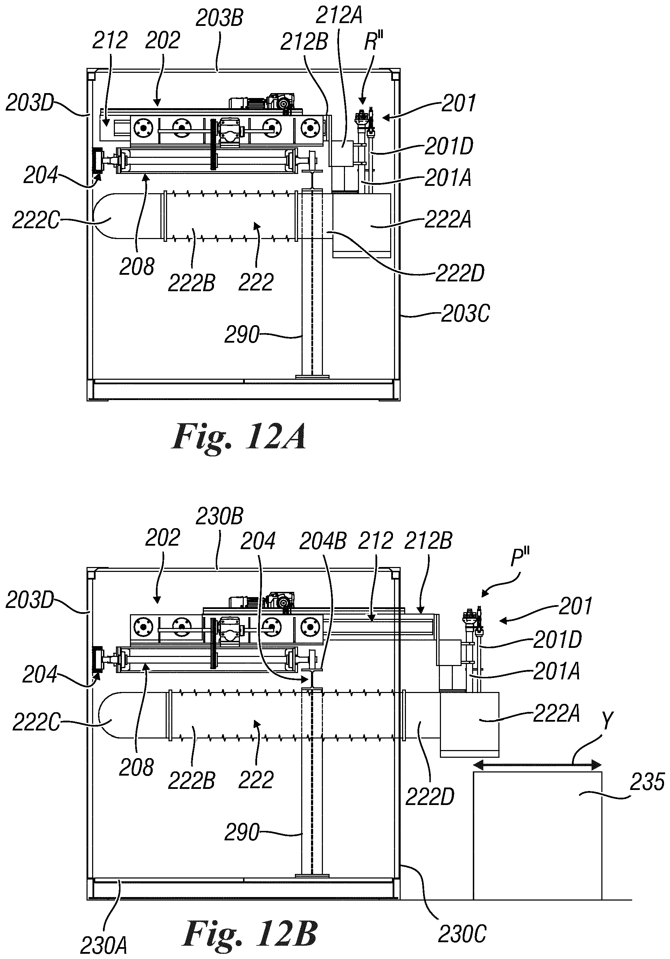

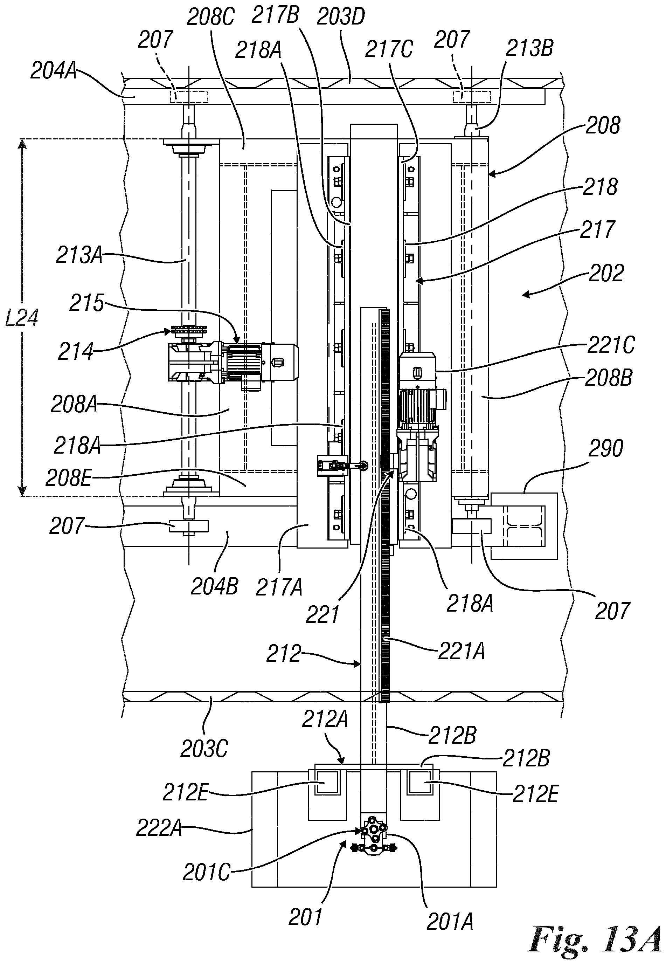

The system according to this third embodiment comprises, like the previous ones: an oxy-fuel cutting device 201 (fig. 13A), comprising at least one oxy-fuel cutting torch 201A, and means 202 for handling said oxy-fuel cutting device from a resting position R" (fig. 12A) to at least one operating position P" (fig. 12B), in which said handling means 202 comprise at least one moving element 212 (fig. 13A) adapted to support said at least one oxy-fuel cutting torch and adapted to position itself in a resting position R" (fig. 12A) in which said oxy-fuel cutting device is far from the material to be cut and in which the oxy-fuel cutting device cannot be activated and in at least one first operating position P" (fig. 12B) in which said oxy-fuel cutting device is placed at the material to be cut and can be activated.

Also according to this second embodiment, the system comprises a bearing structure which in the embodiment in question is a container 203 which has in one of the larger side walls 203C thereof, a dedicated opening 240 (fig. 11B) for handling the handling element 212 and the torch 201A in its resting positions R' and in the operating position P' (fig. 12A, 12B).

According to this variant, the opening 240 has much larger size than the opening 140 provided in the previous variant, so as to allow not only the handling element 212 but also the oxy-fuel cutting device 201 and, if present, also the hood 222A of the suction device 222 for extracting the cutting fumes to enter the container. Advantageously, as shown in the figures, the opening 240 extends: in the part of the container in which the guiding elements 204 are provided for the handling means 202 of the oxy-fuel cutting device 201, approximately over the entire height H14 (fig. 11A) of the side wall 203C of the container, or over a section between 50% and 90% of this height H14, and extends in length over a section equal to or slightly greater than the length L12 (fig. 11C) of the guiding elements 204 for the handling means 202 of the oxy-fuel cutting device 201.

When the container houses therein the oxy-fuel cutting device 201 and also the relative handling means 212, the opening 240 is closed for example by two doors 240E and F (fig. 11B hinged to the wall 203C of the container and adapted to rotate from a first position (fig. 11A) in which they close the opening 240 to a second position (fig. 11B, rotated by 90° with respect to the first one in which they leave said opening free and advantageously also to a third and preferred position (dashed in fig. 11B for door 240E only) in which they are rotated by 180°. Preferably the doors 240E and F each comprise two parts 240A-D, connected to each other by hinges 240G and H, so as to be able to rotate the two parts of each door one against the other, so as to arrange them parallel to each other and reduce the encumbrance of the two doors when they are open by 180°, that is when they are in their third position.

The container 203 also has a substantially parallelepiped-shaped body, comprising: a bottom wall 203A, an upper wall 203B and a plurality of side walls 203C-F, which delimit a space S adapted to house therein the handling means 202, the movement element 212B and the oxy-fuel cutting device 201 when said movement element is in the resting position R" (fig. 12A).

Also according to this variant, the oxy-fuel cutting device 201 and the container 203 are shaped and dimensioned in such a way as to move at least one portion 212B (fig. 10C) of said handling element 212, adapted to carry said at least one oxy-fuel cutting torch 201A, from the inside of the container to the outside of the container passing through said opening 240 of the container 203 and vice versa, so as to bring said handling element 212 and the relative torch 201A from the resting position R' to the operating position P' and vice versa.

According to a first preferred embodiment, the large-sized container 203 has: a length of at least 6 m, preferably at least 12 m, more preferably at least 12.192 m, a width of at least 1.2 m, preferably at least 2.3 m, more preferably at least 2.438 m, and a height of at least 1.2 m, preferably at least 2.3 m, more preferably at least 2.591 m.

The container 103 could however also have smaller dimensions, for example the same as the container previously described, that is a length of at least 3 m, preferably at least 6 m, more preferably at least 6.085 m, a width of at least 1.2 m, preferably at least 2.3 m, more preferably at least 2.438 m, and a height of at least 1.2 m, preferably at least 2.3 m, more preferably at least 2.591 m.

The large-sized container 103 according to this variant according to a further preferred embodiment of the invention is a standard-sized container, and advantageously it is a container having the ISO standard intermodal container sizes, of the 40-foot type and according to a further (less preferred) variant of the 20-foot type. According to further variants not shown, the container 103 could also be sized like other known standard containers, for example of the 40 or 45-foot high-cube type, or 48-foot or 53-foot, or also have non-standard or uncommon dimensions, and also be of the "flat rack" or "open top" type.

Preferably the container 103 has the same features as the ISO standard containers from 20 to 40 feet (these features being of the usual type for those skilled in the art will not therefore be described in detail below).

As usual in standard containers one of the smaller side walls (in the example the wall 103F) provides two usual doors (not shown) which close an opening which substantially extends over the whole width of the side wall 103F and which allows access to the inner space S delimited by the container itself.

Preferably, the larger side walls, 203C and 203D and also the upper 203B and lower 203A walls, also have the additional openings 205A-D (fig. 11D), closed by doors 206A-D or panels 206E, 106F, 106G in addition to those provided in standard containers, the function of which will be described in detail below. It should be noted that these additional openings and the related closing doors or panels are preferably shaped and made in such a way that the container still complies with the technical features of ISO standard containers. Preferably also the container 203 comprises first guiding elements 204 constrained to at least one of the walls 203A-F thereof, adapted to guide the means 202 for handling the oxy-fuel cutting device 201, in a plurality of possible operating positions.

More specifically, according to the variant in question, the first guiding elements 204 comprise a first and a second rectilinear longitudinal guiding profile 204A and 204B (fig. 11D), in which the first profile 204A is constrained to the wall 203D of the container (opposite to that 203C in which the opening 240 for handling the oxy-fuel cutting device is provided), and is for example of the U-section type, while the other profile 204B is constrained, for example, to two or more columns 290 rigidly constrained to the inner face 203A of the bottom wall 203A of the container, and positioned at a distance S from the side wall 203C, so that the oxy-fuel cutting device 201 and the handling element 212 can be housed inside the container, when they are in the resting position, and in this resting position the oxy-fuel cutting device can remain connected to the handling element.

The second profile 204B can be a profile of the H-section type or also a U-section profile like that 204A.

The two profiles 204A and B are positioned in such a way that their flat guiding surfaces lie in a plane V (dashed in fig. 11D) common and parallel to the inner face 203A' of the bottom wall 203A of the container.

The guiding elements 204, like the previous embodiment, are provided at a height H11 (fig. 11D), measured starting from the inner face of the bottom wall 203A of the container greater than 50% of the inner height H12 of the container and more preferably between 60% and 90% of this height H12 and even more preferably equal to about 65% of this height (for example the height H11 is equal to about 1.6 m).

According to variants not shown of the invention, the guiding elements 104 could also be shaped in a different way, for example providing even only one guiding element or more than two elements, and could also be constrained to other walls of the container, for example to the upper or lower wall, or other supporting elements of the column type.

The guiding elements 204 can have any conventional shape for those skilled in the art adapted to support and guide a trolley 208 (described in detail below) of the oxy-fuel cutting device along a predefined path, preferably rectilinear and parallel to the longitudinal axis Z2 (fig. 11D) of the container, the guiding elements are for example of the same type described with reference to the guiding elements 4; and are adapted to guide usual wheels 207, for example of the bearing type, of the trolley 208 of the handling means 202 of the cutting device 201 along a rectilinear path.

The guiding elements, in the case of a 40-foot container, have for example a length L12 (fig. 11C) between 30% and 80% of the overall inner length L13 of the container 203, more preferably between 40% and 70% of the length L13 and even more preferably equal to about 66% of this length L13, for example the length L11 is equal to about 8.10 m. Advantageously, also inside the container 203, at its four corners there are members (not shown) for lifting the container, of a type similar to those previously described.

Inside the container, inner walls 211 can also be provided to divide the inner space of the container into smaller spaces S1"-S6". The walls 211 are preferably usual insulating panels, in particular of the type adapted to insulate against noise and dust.

The spaces S1'-S6' are substantially identical to those already described for the previous embodiment (except for a different positioning and / or sizing), and will not be further described below.

The means 202 for handling the oxy-fuel cutting device 101 comprise the trolley 108, to which the handling element 112, hereinafter also referred to as the arm 112, is connected, at one end of which a head 112A is provided to which the at least one oxy-fuel cutting torch 100A is constrained.

The trolley 208 is substantially similar to that 108 previously described; it also comprises for example a plurality of usual profiles 208A-E arranged perpendicularly to each other so as to form a body having a substantially rectangular shape, and having a width L24 (fig. 13A) slightly less than the distance of the inner width L15 (fig. 11D) between the guiding elements 204 of the container; from the two outermost side profiles 208C and E the ends of usual handling shafts 213A, B which carry the wheels 207 adapted to engage with and be guided by the guiding elements 204 provided inside the container 3 branch off. The wheels 207 are, for example, of the bearing type, and are connected, for example to an idle shaft 213B and to a motorized shaft 213A, which in turn is connected through usual transmission elements 214 (for example of the chain / pinion type) to motorized means 215 (for example of the type comprising an electric motor and a reducer) adapted to move the trolley 108 back and forth along the guiding elements 104 in the various desired positions. The trolley 208 also provides a slide 217 carrying the arm 212, comprising for example a base 217A and two opposite side walls 217B, C, the slide 217 also comprises usual rectilinear guiding elements 218A for example associated with the side walls 217B and 217C and each comprising, for example, a bearing, adapted to cooperate with corresponding counter elements (for example a U-shaped guide in which the bearings of the elements 218A can rotate) provided on the arm 212, adapted to allow only a translation of the arm 212 rectilinear and perpendicular to the longitudinal axis of the trolley 218 (and to that Z2 (fig. 11D of the container 203), and prevent the arm from tilting and / or lifting with respect to the slide 212.

According to the variant in question, the slide 217 is preferably fixed and stably constrained to the trolley 218.

The arm 212 can for example be a usual rectangular section profile, and provides means 221 (fig. 13A) for its rectilinear and perpendicular handling to the longitudinal axis of the trolley, along the slide 217, which provide for example (fig. 13A) a rack 221A provided for example on an upper face of the arm 212, and a pinion connected to an electric motor 221C, rigidly constrained in turn to the trolley 208.

The head 212A of the arm 212 has, for example, a support element 212B which extends transversely to the arm 212 and to which at least one oxy-fuel cutting torch 201A is constrained.

The oxy-fuel cutting torch is of the conventional type for those skilled in the art and comprise usual connecting members 201C for the fluids necessary for them to operate, fed through usual pipes (provided in the container). The torches 201A also comprise usual means 201D adapted to generate a pilot flame for the torches themselves, also equipped with the relative usual connecting members 1E of the fluids necessary for them to operate. The head 212A of the arm 212 also comprises support elements 212E for means 222 for extracting the fumes generated during cutting, these means 222 comprise a fume extraction hood 222A, and a pipe 222B, 222C for conveying the fumes to a usual suction and filtering device 223 (schematically represented in fig. 11D).

The fume conveying pipe preferably comprises a first extensible pipe section 222B, connected to the hood 222A by means of a rigid connecting element 222D, and a second section 222C connected to the suction and filtering device 223. The first pipe section 222B is preferably made of a usual flexible and extensible material (for example of the accordion or corrugated type) so as to be able to compensate for the displacements of the trolley 208 and the handling element 212, while the other pipe sections are preferably made of a usual rigid material.

The suction and filtering device 223 is of the usual type and comprises usual suction means 23B and a usual group of usual filters of the previously described type.

As shown in figures 11A-B, the suction and filtering device 223 is advantageously provided inside the container in the space S5" (fig. 11B) provided near the side wall 203E opposite to that in which the usual opening for access to the container is provided, and with the group of filters provided at the opening provided in the side wall 203C of the container, so that it can be easily replaced (completely or only partially, for example only the filter cartridges) by removing the panel 206F which usually closes this opening.

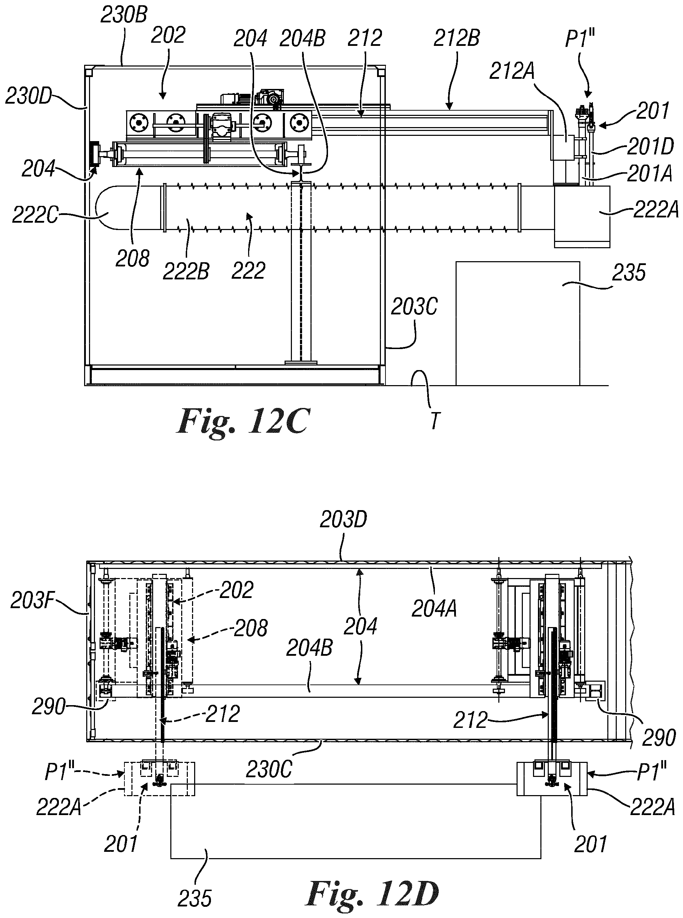

Preferably, the handling element 212 (also called arm 212) can be of the telescopic type so that it can be completely housed inside the container together with the oxy-fuel cutting device 201 and the extraction hood 222A (as shown in fig. 12A), but also in such a way as to be able to protrude from the opening 240 of the wall 203C of the container for a portion 212Z of considerable length, for example having a length T1 (fig. 12C) between 50 cm and 1100 cm (as shown in fig. 12C) so as to be able to transversally cut also metal elements 235 of considerable thickness, for example with a thickness of between 50 cm and 100 cm, resting on the outside of the container and near the wall 203C thereof.

The container comprises therein a plurality of pipes similar to what previously described connected to a fluid control station 25, adapted to feed the oxy-fuel cutting torch 1A, the means 201D for the pilot flame with the fluids necessary for them to operate. The fluid control station 25 is for example of the previously described type.

The fluid supply pipes are of a conventional type for those skilled in the art and are provided inside the container and are shaped and dimensioned in such a way as to reach and be connected to the connecting members 201C and 201E of the oxy-fuel cutting torch 201A and the means for the pilot flame 201D and to allow the oxy-fuel cutting device 101 to be handled between its various operating positions.

The fluid control station 25, like the previous embodiment, is preferably housed inside the container 203 and is preferably housed inside the dedicated seat S1" which is advantageously accessible also or only from the outside of the container through the opening 205A, provided in the side wall 203C of the container 203 once the closing doors 206A of said opening have been opened.

The container, like the previous embodiment, comprises therein a plurality of electric cables suitable for powering the electric motors of the handling means 215, 220 provided on the trolley 208 and on the slide 217, these cables are provided at the outlet of a power supply station housed inside the container in the space S2". All the other usual components of the oxy-fuel cutting device that require a conventional power supply for those skilled in the art are also connected to the power supply station by means of appropriate electrical cables (not shown).

A command and control unit of the system, of the type described above, is preferably also housed in the seat S2".

The container preferably also comprises therein means for cooling the oxy-fuel cutting torches 101A, of the type described above, which are preferably housed inside the container 203 and are preferably housed inside the dedicated seat S3".

Advantageously, the container also has current generating means therein, of the type described above and comprising electric cables (not shown) housed inside the container and for connection to the power supply station, preferably housed inside the container 203 and preferably inside the dedicated seat S4".

The transportable system according to this variant also comprises a command and control unit for commanding and controlling all the components of the system of the type described above.

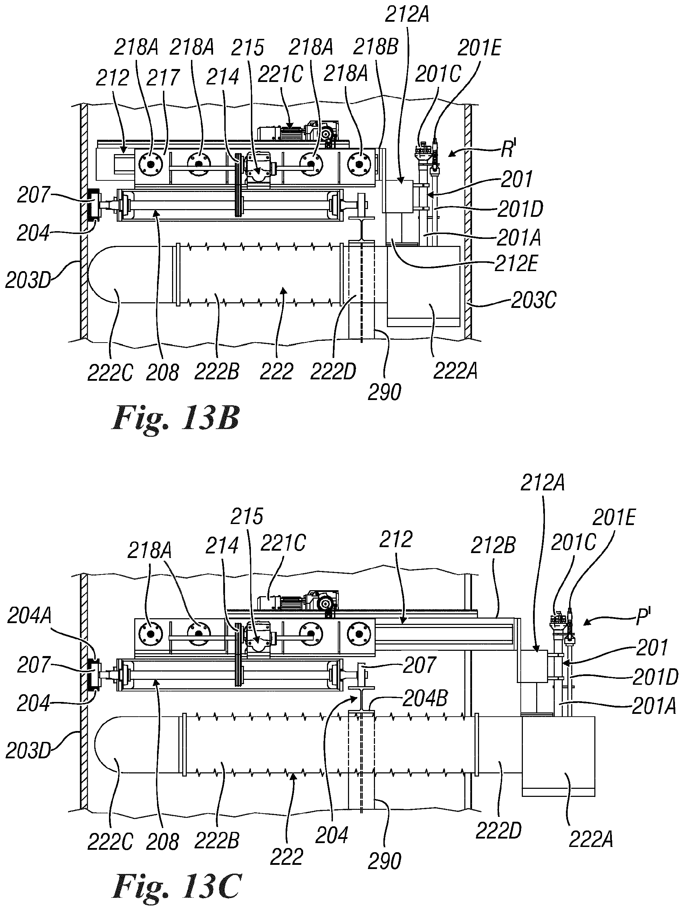

The operation of the system according to the variant in question provides:
a) transporting the container 203 to the place where large metal materials, in particular large scrap pieces, should be cut into smaller pieces;
b) adjusting the height of the container from the ground, if necessary, by acting on the lifting devices;
c) opening the doors 240E and F which close the opening 240 of the side wall 203C of the container (fig. 11B) in order to open the opening 240 of the container and allow the handling of the handling element 212, of the oxy-fuel cutting device 201 and the hood 222A (if present) even outside the container 8 (as shown in fig. 13C), that is the handling thereof from its resting position R' (fig. 13B), to a first operating position P' (fig. 13C) thereof in which the element 212, the oxy-fuel cutting device 201 and the hood 222A (if present) protrude outside the container 203 passing through the opening 240 provided in the container;
d) then handling the trolley 208 so as to position the handling element 212 and consequently also the oxy-fuel cutting torch 201A in the position in which the scrap piece 235 is to be cut transversely, and then the handling element 212 is handled to lift the oxy-fuel cutting torch transversely to the scrap piece 235 (in the direction of the arrow Y in fig. 12B) over the entire width of the scrap piece 235 until the torch is in a cutting end position P1" (fig. 12C) in which it is no longer above the scrap piece, during the cutting procedure the suction means, if present, are also activated; if the scrap piece is to be cut longitudinally, similar steps should be taken, starting from the situation in which the torch has been taken out of the container (fig. 12D, handling means and oxy-fuel cutting device represented with a solid line), then the oxy-fuel cutting torch is positioned above the scrap piece in a desired position (for example at one end and in the center of the scrap piece) and the handling means are then moved so as to move the torch along the entire length of the scrap piece, the torch is then brought back to a resting position outside the container (fig. 12D, handling means and oxy-fuel cutting device shown with dashed line),
e) then bringing the cutting torch back to the initial position P" (fig. 12D) and if necessary handling the trolley 208 to make another cut.

As highlighted in fig. 11C thanks to the fact that the guides 204 extend for a significant length L12, for example for at least 30% of the overall length L13 of the container, more preferably for at least 50% and even more preferably for at least 60% (for example for a 40-foot container for a length of at least 6 m) thanks to the embodiment in question it is possible to cut scrap pieces 235 having equally significant lengths.

Finally, it should be noted that the two embodiments described so far have been provided by way of example and that numerous further variants are possible, all falling within the same inventive concept. The system could, for example, be without suction means, moreover the system could not include the electricity generator and / or the power supply station and / or the command and control unit, as all or only some of the latter components could be additional components external to the container and associated with it by means of suitable connections (for example cables and / or pipes).

According to a first variant, the means 112F for connecting the end portion 112B of the arm 112 with the head 112A carrying the torch 100A could provide a usual member for automatic rotation of this head, adapted to move the longitudinal axis S (fig. 10A ) of the torch from a working position perpendicular to the ground, to a 90 degree rotated position (not shown) in which the torch lies substantially parallel to the ground. Thanks to this rotation member, and to a suitable obvious dimensioning of the arm 112 and of the head 112A, this head and the torch associated with it (together with the means for the pilot flame) could remain stably constrained to the arm 112 even when this arm is in the its resting position R' in which it is completely housed in the container. According to this variant, the operation of the system would provide, in an initial phase of positioning the torch, to move the arm 112 with the torch in a position parallel to the ground, so as to make it come out of the container through the opening 140, and once the arm and the head and the torch are outside the container to rotate the torch towards the ground by 90° in order to bring it into the operating position. These operations would preferably be automatically commanded and controlled by the system control unit. The advantage of this embodiment lies in the fact that the system would be simpler and easier to use because it is immediately ready for use once the container 3 has been positioned, as it is no longer necessary to associate the head and the relative torch to the movable arm 112, as described in the previous embodiment.

It should be noted that this variant could also be adopted in the first and third embodiments.

According to a further variant, means for handling the scrap piece could be provided to allow the cutting of the scrap piece in the event that the oxy-fuel cutting torch, once positioned outside the container, is not also connected to means for its further handling to carry out the cut.

According to a further variant, the container could also be a container of the "flat rack" type, that is of the type without greater side walls and upper walls, according to this variant (not shown) the system would provide an additional support and guide structure for supporting and guiding the means for handling the oxy-fuel cutting device, of a conventional type for those skilled in the art, which, however, is always housed inside the container, at least in the resting position, and which is adapted to guide and support said handling means (so that they also are inside the container at least in the resting position), and in which the opening for the passage of the handling element of the torch is the opening that is created due to the fact that some walls of this type of containers are not present.

According to a further variant, the container could also be of the "open top" type and in which the opening for the passage of the torch handling element is the opening of the upper wall of the container.

## Claims

1. A transportable system for cutting large metal materials (35; 135, 235), in particular large scrap pieces, comprising an oxy-fuel cutting device (1; 101, 201), and means (2; 102, 202) for handling said oxy-fuel cutting device (1; 101, 201) from a resting position (R) to at least one operating position (P),
- wherein said oxy-fuel cutting device (1; 101, 201) comprises at least one oxy-fuel cutting torch (1A; 100A, 201A),
- a transportable and large-sized bearing structure (3; 103; 203) having a length of at least 3 m, preferably at least 6m, more preferably at least 6.085 m, and a width of at least 1.2 m, preferably at least 2.3 m, and more preferably at least 2.438 m, and preferably also a height of at least 1.2 m, preferably at least 2.3 m, more preferably at least 2.591 m.
- and wherein said handling means (2; 102, 202) comprise at least one handling element (12; 112, 212) adapted to support said at least one oxy-fuel cutting torch and adapted to position itself in a resting position (R') in which said oxy-fuel cutting torch (1A; 100A, 201A), if associated with said handling element (12; 112, 212), is far from the material to be cut (35; 135, 235) and cannot be activated, and at least in one operating position (P') in which said oxy-fuel cutting torch (1A; 100A, 201A), when associated with said handling element (12; 112, 212), is located at the material to be cut and can be activated;
**characterized in that it comprises:**
- a transportable and large-sized bearing structure (3; 103, 203), comprising at least one bottom wall (3A; 103A, 203A) having a substantially rectangular shape, and delimiting a space (S) adapted to house inside said shape at least said means (2; 102, 202) for handling said oxy-fuel cutting device (1; 101, 201) with said handling element(12; 112, 212) in a resting position (R'),
- and **in that** said handling element (12; 112, 212) and said bearing structure (3; 103, 203) are shaped and dimensioned in such a way as to be able to move at least one portion (12B; 112B, 212B) of said handling element (12; 112, 212) which is adapted to carry said at least one oxy-fuel cutting torch (1A; 100A, 201A) from the inside of the bearing structure (3; 103, 203) to the outside of the bearing structure and vice versa, so as to move at least said handling element from the resting (R') to an operating (P') position and vice versa,
- and **in that** at least in said operating position (P') of the handling element (12; 112, 212) said handling element (12; 112, 212) is adapted to support said at least one oxy-fuel cutting torch (1A; 100A, 201A).

2. The transportable system according to claim 1, **characterized in that** the transportable and large-sized bearing structure is a container (3; 103, 203) comprising the bottom wall (3A; 103A, 203A) and at least two side walls (3C-3F; 103C-103F, 203C-203F), and preferably also one upper wall (3B, 103B, 203B), said walls (3A-3F; 103A-103F, 203A-F) being adapted to delimit a substantially parallelepiped-shaped body, having at least one opening (3G; 140, 240) provided in at least one of said walls (3A-3F; 103A-103F) or delimited by two or more of said walls (3A-3F; 103A-103F, 203A-F), wherein said walls (3A-3F; 103A-103F, 203A-F) delimit the space (S) adapted to house therein at least said handling element (12, 112, 212) when said handling element is in a resting position (R'), and **in that** said handling element (12; 112, 212) and said container (3; 103, 203) are shaped and dimensioned in such a way as to move at least the portion (12B; 112B, 212B) of said handling element (12; 112, 212) which is adapted to carry said at least one oxy-fuel cutting torch (1A; 100A, 201A) from the inside of the container to the outside of the container passing through said opening (3G; 140 240) of the container and vice versa, so as to move at least said portion (12B; 112B, 212b) of the handling element from the resting (R') to the operating (P') position and vice versa.

3. The transportable system according to any one of the preceding claims, **characterized in that** the transportable and large-sized bearing structure is a container (3; 103, 203) and **in that** said container is one of the following types:
- a container having the ISO standard intermodal container sizes, of the 20-foot or the 40-foot type,
- or a container having the standard container sizes, of the 40-foot or 45-foot high-cube, or 48-foot or 53-foot type,
- or a container of the "flat rack" or "open top" type.

4. The transportable system according to any one of the preceding claims, **characterized in that** the transportable and large-sized bearing structure (3, 103, 203) comprises, constrained to at least one of its walls (3A-3F; 103A-103F, 203A-F) and /or to an additional bearing structure (290) carried by said transportable and large-sized bearing structure (3, 103, 203), at least one guiding element (4, 104, 204) adapted to guide, preferably along a path which is rectilinear and parallel or perpendicular to a longitudinal axis (Z1; Z2) of said bearing structure (3; 103, 203), the means (2; 102, 202) for handling the oxy-fuel cutting device (1; 101, 201) from a resting position (R) to at least one operating position (P), so as to move at least one portion (12B; 112B, 212B) of said handling element (12; 112, 212) which is adapted to carry said at least one oxy-fuel cutting torch (1A; 101A, 201A) from the inside of the bearing structure (3; 103, 203) to the outside of the bearing structure and vice versa, and to move at least said handling element from the resting (R') to the operating (P') position and vice versa.

5. The transportable system according to claim 4, **characterized in that**:
- the at least one guiding element (4, 104, 204) is constrained inside the bearing structure: to two mutually opposite faces of side walls (3C, 3D; 103C, 103D) of said bearing structure, and /or to at least one bearing element (290) constrained to one of the container walls,
- and **in that** the at least one guiding element (4, 104, 204) is constrained at a height (H1; H11) measured starting from the inner surface of a bottom wall (3A, 103A) of said bearing structure which is greater than 50% of the inner height (H2, H12) of said bearing structure and more preferably which is between 60% and 90% of this inner height (H2; H12) and even more preferably equal to about 65% - 70% of this inner height.

6. The transportable system according to any one of the preceding claims, **characterized in that** the transportable and large-sized bearing structure (3, 103, 203) is a container and **in that** the at least one opening (3G; 140, 240) for the passage of at least said portion (12B; 112B, 212B) of the element for moving from the resting (R') to the operating (P') position and vice versa, is: an opening (3G) which is usually provided in said containers and closed by doors (3F), or an additional and dedicated opening (140, 240) provided in one of the side walls (103A-F) of said container, preferably in one of the larger side walls of the container.

7. The transportable system according to any one of the preceding claims, **characterized in that** the means (2; 102, 202) for handling the oxy-fuel cutting device (1; 101, 201) comprise a trolley (8, 108, 208) to which the handling element (12, 112, 212) is connected; wherein the trolley (8, 108, 208) has a body preferably: having a substantially rectangular shape and a width (L1, L14) less than the inner width (L2; L15) of the transportable and large-sized bearing structure (3; 103, 203),
- wherein the trolley (8;108, 208) preferably has wheels (7; 107, 207) adapted to engage with and be guided by the guiding elements (4, 104, 204) provided inside the transportable and large-sized bearing structure (3; 103, 203),
- wherein the trolley (8;108, 208) comprises first motorized means (15, 115 215) for its movement along the guiding elements (4, 104) provided inside the transportable and large-sized bearing structure (3; 103);
- wherein the trolley (8;108, 208) comprises second motorized means (20, 120 220) for the movement of the handling element (12; 112 212) adapted to support said at least one oxy-fuel cutting torch,
- wherein preferably the trolley (8, 108, 208) comprises a guiding element (17; 117 217) for said handling element (12; 112 212) adapted to permit only a translation which is rectilinear and parallel or perpendicular to the longitudinal axis (Z1, Z2) of the transportable and large-sized bearing structure (3; 103 203) and shaped in such a way as to prevent the arm from tilting and /or lifting with respect to the trolley (8; 108 208).

8. The transportable system according to any one of the preceding claims, **characterized in that** it comprises suction means (22, 222) comprising an extraction hood (22A, 22A), and at least one pipe (22B, 22C; 222b, 222C) for conveying the fumes generated during the cutting to a suction and filtering device (23, 223),
- wherein preferably said extraction hood is connected to the handling element (12; 112, 212) adapted to support said at least one oxy-fuel cutting torch,
- wherein preferably the suction device and the extraction hood (22A, 22A), and at least one pipe (22B, 22C; 222B, 222C) are housed in said transportable and large-sized bearing structure (3, 103, 203) when the handling element (12; 112, 212) is in the resting position (R'), and **in that** at least one part of said pipe (22B, 22C; 222b, 222C) is extensible so as to be able to follow the movements of said handling element (12; 112, 212).

9. The transportable system according to any one of the preceding claims, **characterized in that** it comprises, associated inside the transportable and large-sized bearing structure (3, 103, 203):
- a plurality of pipes (24A-E) connected to a fluid control station (25, 125, 225), adapted to feed at least the oxy-fuel cutting torches (1A; 100A, 201A) with the fluids necessary for them to operate, wherein also said fluid control station is preferably housed in the transportable and large-sized bearing structure (3, 103, 203);
- and /or a plurality of electric cables (29A-C) adapted to feed at least the electric motors of the means (2; 102, 202) for handling the system and connected to a power station (30, 130, 230), in which also said power station is preferably housed in the transportable and large-sized bearing structure (3, 103, 203);
- and /or a plurality of cooling pipes (33C, 33G, 33H) connected to a cooling station (33, 133, 233), adapted to feed at least the oxy-fuel cutting torches (1A, 100A, 201A) with the fluids necessary for them to cool; wherein also said cooling station (33, 133, 233) is preferably housed in the transportable and large-sized bearing structure (3, 103, 203).

10. The transportable system according to any one of the preceding claims, **characterized in that** it comprises a plurality of inner walls (11, 111, 211), associated inside the transportable and large-sized bearing structure (3, 103, 203), which are adapted to at least partially delimit a plurality of seats (S1-S6) at least partially separate and distinct from each other;
wherein said seats preferably comprise:
- a first space (S1) delimited and closed at least partially by walls (11A), for housing a fluid control station (25, 125, 225), preferably accessible from the outside of the transportable and large-sized bearing structure (3, 103, 203) through an opening (5A) provided in a side wall (3C, 103C 203C) of said bearing structure, and provided with doors (6A, 106A, 206A);
- and /or a second space (S2) delimited and closed at least partially by walls (11B), for housing electric and / or control components (30, 32; 130; 230) preferably accessible from the outside of the container preferably through an opening (5B, 105B; 205B) provided in a side wall (3C, 103C; 203C) of said bearing structure, and provided with doors (6B, 106B, 206B);
- and /or a third space (S3) delimited and closed at least partially by walls (11C), for housing a generator set (33) preferably accessible from the outside of the bearing structure preferably through an opening (5C, 105C 205C) provided in a side wall (3D, 103D; 203D) of the bearing structure, and provided with doors (6C);
- and /or a fourth space (S4) delimited and closed at least partially by walls (11D), for housing a cooling device (34, 134, 234), preferably accessible from the outside of the container through an opening (5D) provided in a side wall (3D) of said bearing structure, and doors (6D);
- and /or a fifth space (S5) delimited and closed at least partially by a wall (11E), for housing a device for filtering the fumes extracted during oxy-fuel cutting (23), preferably accessible from the outside of the container through an opening (5I) provided in a side wall (3C) of said bearing structure, and provided with a closing door (6F);
- and /or **in that** near an opening (3G) of said bearing structure from which the oxy-fuel cutting device (1) can protrude, a further protection wall (11F) is provided, which is adapted to at least partially divide the inner space of said bearing structure into two further spaces (A1, A2): a first space (A1) provided near said opening (3G) and adapted to house the part of the cutting device comprising the oxy-fuel torches, when they are in a resting position, and a second space (A2) comprising all the other inner space of said bearing structure.

## Patentansprüche

1. Transportfähiges System zum Schneiden großer metallischer Materialien (35; 135, 235), insbesondere großer Schrottstücke, umfassend eine Autogenschneidvorrichtung (1; 101, 201) und Einrichtungen (2; 102, 202) zum Handhaben der Autogenschneidvorrichtung (1; 101, 201) aus einer Ruheposition (R) in mindestens eine Betriebsposition (P),
- wobei die Autogenschneidvorrichtung (1; 101, 201) mindestens einen Autogenschneidbrenner (1A; 101A, 201A) umfasst,
- eine transportfähige und großformatige Trägerstruktur (3; 103; 203), die eine Länge von mindestens 3 m, vorzugsweise mindestens 6 m, bevorzugter mindestens 6,085 m und eine Breite von mindestens 1,2 m, vorzugsweise mindestens 2,3 m, bevorzugter mindestens 2,438 m und vorzugsweise auch eine Höhe von mindestens 1,2 m, vorzugsweise mindestens 2,3 m, bevorzugter mindestens 2,591 m aufweist,
- und wobei die Handhabungseinrichtungen (2; 102, 202) mindestens ein Handhabungselement (12; 112, 212) umfassen, das angepasst ist, um den mindestens einen Autogenschneidbrenner zu tragen, und angepasst ist, um sich selbst in einer Ruheposition (R') zu positionieren, in der der Autogenschneidbrenner (1A; 101A, 201A), wenn er mit dem Handhabungselement (12; 112, 212) assoziiert ist, weit von dem zu schneidenden Material (35; 135, 235) entfernt ist und nicht aktiviert werden kann, und mindestens in einer Betriebsposition (P'), in der sich der Autogenschneidbrenner (1A; 101A, 201A), wenn er mit dem Handhabungselement (12; 112, 212) assoziiert ist, an dem zu schneidenden Material befindet und aktiviert werden kann;
**dadurch gekennzeichnet, dass es Folgendes umfasst:**
- eine transportfähige und großformatige Trägerstruktur (3; 103, 203), umfassend mindestens eine Bodenwand (3A; 103A, 203A), die eine im Wesentlichen rechteckige Form aufweist und einen Raum (S) begrenzt, der angepasst ist, um innerhalb dieser Form mindestens die Einrichtungen (2; 102, 202) zum Handhaben der Autogenschneidvorrichtung (1; 101, 201) mit dem Handhabungselement(12; 112, 212) in einer Ruheposition (R') unterzubringen,
- und dass das Handhabungselement (12; 112, 212) und die Trägerstruktur (3; 103, 203) auf eine Weise geformt und dimensioniert sind, um in der Lage zu sein, mindestens einen Abschnitt (12B; 112B, 212B) des Handhabungselements (12; 112, 212), der angepasst ist, um den mindestens einen Autogenschneidbrenner (1A; 100A, 201A) von der Innenseite der Trägerstruktur (3; 103, 203) zu der Außenseite der Trägerstruktur und umgekehrt zu tragen, um mindestens das Handhabungselement von der Ruheposition (R') in eine Betriebsposition (P') und umgekehrt zu bewegen,
- und dass mindestens in der Betriebsposition (P') des Handhabungselements (12; 112, 212) das Handhabungselement (12; 112, 212) angepasst ist, um den mindestens einen Autogenschneidbrenner (1A; 101A, 201A) zu halten.

2. Transportfähiges System nach Anspruch 1, **dadurch gekennzeichnet, dass** die transportfähige und großformatige Trägerstruktur ein Container (3; 103, 203) ist, umfassend die Bodenwand (3A; 103A, 203A) und mindestens zwei Seitenwände (3C-3F; 103C-103F, 203C-203F) und vorzugsweise auch eine obere Wand (3B, 103B, 203B), wobei die Wände (3A-3F; 103A-103F, 203A-F) angepasst sind, um einen im Wesentlichen parallelepipedischen Körper zu begrenzen, der mindestens eine Öffnung (3G; 140, 240) aufweist, die in mindestens einer der Wände (3A-3F; 103A-103F) bereitgestellt ist oder von zwei oder mehreren der Wände (3A-3F; 103A-103F, 203A-F) begrenzt ist, wobei die Wände (3A-3F; 103A-103F, 203A-F) den Raum (S) begrenzen, der angepasst ist, darin mindestens das Handhabungselement (12, 112, 212) unterzubringen, wenn das Handhabungselement in einer Ruheposition (R') ist, und dass das Handhabungselement (12; 112, 212) und der Container (3; 103, 203) auf eine Weise geformt und dimensioniert sind, um mindestens den Abschnitt (12B; 112B, 212B) des Handhabungselements (12; 112, 212), das angepasst ist, um den mindestens einen Autogenschneidbrenner (1A; 101A, 201A) von der Innenseite des Containers zu der Außenseite des Containers zu tragen, durch die Öffnung (3G; 140, 240) des Containers zu bewegen und umgekehrt, sodass mindestens der Abschnitt (12B; 112B, 212b) des Handhabungselements von der Ruheposition (R') in die Betriebsposition (P') bewegt wird und umgekehrt.

3. Transportfähiges System nach einem der vorherigen Ansprüche, **dadurch gekennzeichnet, dass** die transportfähige und großformatige Trägerstruktur ein Container (3; 103, 203) ist und dass der Container einer der folgenden Typen ist:
- ein Container, der die standardmäßigen ISO-Größen für intermodale Container vom Typ 20-Fuß oder 40-Fuß aufweist,
- oder einen Container, der die standardmäßigen Größen eines 40-Fuß- oder 45-Fuß-High-Cube-Containers oder eines Containers von Typ 48-Fuß- oder 53-Fuß aufweist,
- oder ein Container vom Typ "flat rack" oder "open top".

4. Transportfähiges System nach einem der vorherigen Ansprüche, **dadurch gekennzeichnet, dass** die transportfähige und großformatige Trägerstruktur (3, 103, 203), die an mindestens einer ihrer Wände (3A-3F; 103A-103F, 203A-F) und /oder an einem zusätzlichen Trägerstruktur (290), die von der transportfähigen und großformatigen Trägerstruktur (3, 103, 203) getragen wird, mindestens ein Führungselement (4, 104, 204) umfasst, das angepasst ist, um die Einrichtungen (2; 102, 202) zum Handhaben der Autogenschneidvorrichtung (1; 101, 201) vorzugsweise entlang eines geradlinigen Wegs, der parallel oder senkrecht zu einer Längsachse (Z1; Z2) der Trägerstruktur (3; 103, 203) ist, aus einer Ruheposition (R) in mindestens eine Betriebsposition (P) zu führen, um mindestens einen Abschnitt (12B; 112B, 212B) des Handhabungselements (12; 112, 212), der angepasst ist, den mindestens einen Autogenschneidbrenner (1A; 101A, 201A) zu tragen, von der Innenseite der Trägerstruktur (3; 103, 203) zu der Außenseite der Trägerstruktur und umgekehrt zu bewegen, und um mindestens das Handhabungselement von der Ruheposition (R') in die Betriebsposition (P') und umgekehrt zu bewegen.

5. Transportfähiges System nach Anspruch 4, **dadurch gekennzeichnet, dass**:
- das mindestens eine Führungselement (4, 104, 204) im Inneren der Trägerstruktur eingespannt ist: an zwei einander gegenüberliegenden Flächen von Seitenwänden (3C, 3D; 103C, 103D) der Trägerstruktur und /oder an mindestens einem Trägerelement (290), das an einer der Containerwände eingespannt ist,
- und dass das mindestens eine Führungselement (4, 104, 204) in einer Höhe (H1; H11), gemessen ausgehend von der Innenfläche einer Bodenwand (3A, 103A) der Trägerstruktur, eingespannt ist, die größer ist als 50 % der Innenhöhe (H2, H12) der Trägerstruktur und die vorzugsweise zwischen 60 % und 90 % dieser Innenhöhe (H2; H12) und noch bevorzugter gleich wie etwa 65 % - 70 % dieser Innenhöhe ist.

6. Transportfähiges System nach einem der vorherigen Ansprüche, **dadurch gekennzeichnet, dass** die transportfähige und großformatige Trägerstruktur (3, 103, 203) ein Container ist und dass die mindestens eine Öffnung (3G; 140, 240) für den Durchgang mindestens des Abschnitts (12B; 112B, 212B) des Elements zum Bewegen von der Ruhe- (R') in die Betriebsposition (P') und umgekehrt wie folgt ist: eine Öffnung (3G), die normalerweise in den Containern bereitgestellt und durch Türen (3F) verschlossen ist, oder eine zusätzliche und spezielle Öffnung (140, 240), die in einer der Seitenwände (103A-F) des Containers bereitgestellt ist, vorzugsweise in einer der größeren Seitenwände des Containers.

7. Transportfähiges System nach einem der vorherigen Ansprüche, **dadurch gekennzeichnet, dass** die Einrichtungen (2; 102, 202) zum Handhaben der Autogenschneidvorrichtung (1; 101, 201) einen Wagen (8, 108, 208) umfassen, mit dem das Handhabungselement (12, 112, 212) verbunden ist; wobei der Wagen (8, 108, 208) einen Körper aufweist, der vorzugsweise: eine im Wesentlichen rechteckige Form und eine Breite (L1, L14) aufweist, die geringer ist als die innere Breite (L2; L15) der transportfähigen und großformatigen Trägerstruktur (3; 103, 203),
- wobei der Wagen (8;108, 208) vorzugsweise Räder (7; 107, 207) aufweist, die angepasst sind, um mit den Führungselementen (4, 104, 204), die innerhalb der transportfähigen und großformatigen Trägerstruktur (3; 103, 203) bereitgestellt sind, in Eingriff zu kommen und davon geführt zu werden,
- wobei der Wagen (8;108, 208) erste motorisierte Einrichtungen (15, 115, 215) für seine Bewegung entlang der Führungselemente (4, 104) umfasst, die innerhalb der transportfähigen und großflächigen Trägerstruktur (3; 103) bereitgestellt sind;
- wobei der Wagen (8;108, 208) eine zweite motorisierte Einrichtung (20, 120 220) zur Bewegung des Handhabungselements (12; 112 212) umfasst, das angepasst ist, um den mindestens einen Autogenschneidbrenner zu stützen,
- wobei vorzugsweise der Wagen (8, 108, 208) ein Führungselement (17; 117 217) für das Handhabungselement (12; 112 212) umfasst, das angepasst ist, um nur eine geradlinige und parallele oder senkrechte Verschiebung zu der Längsachse (Z1, Z2) der transportfähigen und großformatigen Trägerstruktur (3; 103 203) zuzulassen und auf eine Weise geformt ist, um ein Kippen und /oder Anheben des Arms in Bezug auf den Wagen (8; 108 208) zu verhindern.

8. Transportfähiges System nach einem der vorherigen Ansprüche, **dadurch gekennzeichnet, dass** es Absaugeinrichtungen (22, 222) umfasst, umfassend eine Absaughaube (22A, 22A) und mindestens eine Rohrleitung (22B, 22C; 222b, 222C), um die beim Schneiden erzeugten Dämpfe zu einer Absaug- und Filtervorrichtung (23, 223) zu leiten,
- wobei vorzugsweise die Absaughaube mit dem Handhabungselement (12; 112, 212) verbunden ist, das angepasst ist, um den mindestens einen Autogenschneidbrenner zu tragen,
- wobei vorzugsweise die Saugvorrichtung und die Absaughaube (22A, 22A) und mindestens eine Rohrleitung (22B, 22C; 222B, 222C) in der transportfähigen und großformatigen Trägerstruktur (3, 103, 203) untergebracht sind, wenn das Handhabungselement (12; 112, 212) in der Ruheposition (R') ist, und dass mindestens ein Teil der Rohrleitung (22B, 22C; 222b, 222C) dehnbar ist, um ihm zu ermöglichen, den Bewegungen des Handhabungselements (12; 112, 212) zu folgen.

9. Transportfähiges System nach einem der vorherigen Ansprüche, **dadurch gekennzeichnet, dass** es assoziiert im Inneren der transportfähigen und großformatigen Trägerstruktur (3, 103, 203) Folgendes umfasst:
- eine Vielzahl von Rohrleitungen (24A-E), die mit einer Fluidsteuerstation (25, 125, 225) verbunden sind, die angepasst ist, um mindestens die Autogenschneidbrenner (1A; 101A, 201A) mit den für ihren Betrieb erforderlichen Fluiden zu versorgen, wobei auch die Fluidsteuerstation vorzugsweise in der transportfähigen und großformatigen Trägerstruktur (3, 103, 203) untergebracht ist;
- und /oder eine Vielzahl von elektrischen Kabeln (29A-C), die angepasst sind, um mindestens die Elektromotoren der Einrichtungen (2; 102, 202) zum Handhaben des Systems zu speisen, und die mit einer elektrischen Zentrale (30, 130, 230) verbunden sind, wobei auch dieses elektrische Zentrale vorzugsweise in der transportfähigen und großformatigen Trägerstruktur (3, 103, 203) untergebracht ist;
- und /oder eine Vielzahl von Kühlrohrleitungen (33C, 33G, 33H), die mit einer Kühlstation (33, 133, 233) verbunden sind, die angepasst ist, um mindestens die Autogenschneidbrenner (1A, 101A, 201A) mit den für ihre Kühlung erforderlichen Fluiden zu versorgen; wobei auch die Kühlstation (33, 133, 233) vorzugsweise in der transportfähigen und großformatigen Trägerstruktur (3, 103, 203) untergebracht ist.

10. Transportfähiges System nach einem der vorherigen Ansprüche, **dadurch gekennzeichnet, dass** es eine Vielzahl von Innenwänden (11, 111, 211) umfasst, die im Inneren der transportfähigen und großformatigen Trägerstruktur (3, 103, 203) assoziiert sind, die angepasst sind, um mindestens teilweise eine Vielzahl von Sitzen (S1-S6) abzugrenzen, die mindestens teilweise voneinander getrennt und unterschiedlich sind;
wobei die Sitze vorzugsweise Folgendes umfassen:
- einen ersten Raum (S1), der mindestens teilweise durch Wände (11A) begrenzt und verschlossen ist, um eine Fluidsteuerstation (25, 125, 225) unterzubringen, die vorzugsweise von der Außenseite der transportfähigen und großformatigen Trägerstruktur (3, 103, 203) durch eine in einer Seitenwand (3C, 103C, 203C) der Trägerstruktur bereitgestellte Öffnung (5A) zugänglich und mit Türen (6A, 106A, 206A) versehen ist;
- und /oder einen zweiten Raum (S2), der mindestens teilweise durch Wände (11B) abgegrenzt und verschlossen ist, zum Unterbringen von elektrischen und / oder Steuerkomponenten (30, 32; 130; 230), die vorzugsweise von der Außenseite des Containers vorzugsweise durch eine Öffnung (5B, 105B; 205B) zugänglich sind, die in einer Seitenwand (3C, 103C; 203C) der Trägerstruktur bereitgestellt und mit Türen (6B, 106B, 206B) versehen ist;
- und/oder einen dritten Raum (S3), der mindestens teilweise durch Wände (11C) begrenzt und verschlossen ist, zum Unterbringen eines Generators (33), der vorzugsweise von der Außenseite der Trägerstruktur vorzugsweise durch eine Öffnung (5C, 105C 205C) zugänglich ist, die in einer Seitenwand (3D, 103D; 203D) der Trägerstruktur bereitgestellt und mit Türen (6C) versehen ist;
- und /oder einen vierten Raum (S4), der mindestens teilweise durch Wände (11D) begrenzt und verschlossen ist, zum Unterbringen einer Kühlvorrichtung (34, 134, 234), die vorzugsweise von der Außenseite des Containers durch eine in einer Seitenwand (3D) der Trägerstruktur bereitgestellte Öffnung (5D) zugänglich ist, sowie Türen (6D);
- und /oder einen fünften Raum (S5), der mindestens teilweise durch eine Wand (11E) begrenzt und verschlossen ist, zum Unterbringen einer Vorrichtung zum Filtern der beim Brennschneiden (23) abgesaugten Dämpfe, die vorzugsweise von der Außenseite des Containers durch eine in einer Seitenwand (3C) der Trägerstruktur bereitgestellte Öffnung (51) zugänglich und mit einer verschließbaren Tür (6F) versehen ist;
- und /oder dadurch, dass in der Nähe einer Öffnung (3G) der Trägerstruktur, aus der die Autogenschneidvorrichtung (1) hervorstehen kann, eine weitere Schutzwand (11F) bereitgestellt ist, die angepasst ist, um den Innenraum der Trägerstruktur mindestens teilweise in zwei weitere Räume (A1, A2) zu unterteilen: einen ersten Raum (A1), der in der Nähe der Öffnung (3G) bereitgestellt und angepasst, um den Teil der Schneidvorrichtung aufzunehmen, der die Autogenbrenner umfasst, wenn sie in einer Ruheposition sind, und einen zweiten Raum (A2), der den gesamten anderen Innenraum der Trägerstruktur umfasst.

## Revendications

1. Système transportable pour couper de gros matériaux métalliques (35 ; 135, 235), en particulier de grosses pièces de ferraille, comprenant un dispositif d'oxycoupage (1 ; 101, 201), et des moyens (2 ; 102, 202) pour manipuler ledit dispositif d'oxycoupage (1 ; 101, 201) depuis une position de repos (R) vers au moins une position de fonctionnement (P),
- dans lequel ledit dispositif d'oxycoupage (1 ; 101, 201) comprend au moins un chalumeau d'oxycoupage (1A ; 101A, 201A),
- une structure porteuse transportable et de grandes dimensions (3 ; 103 ; 203) ayant une longueur d'au moins 3 m, de préférence d'au moins 6 m, plus préférablement d'au moins 6,085 m, et une largeur d'au moins 1,2 m, de préférence d'au moins 2,3 m, et plus préférablement d'au moins 2,438 m, et de préférence également une hauteur d'au moins 1,2 m, de préférence d'au moins 2,3 m, plus préférablement d'au moins 2,591 m,
- et dans lequel lesdits moyens de manipulation (2 ; 102, 202) comprennent au moins un élément de manipulation (12 ; 112, 212) adapté pour supporter ledit au moins un chalumeau d'oxycoupage et adapté pour se positionner dans une position de repos (R') dans laquelle ledit chalumeau d'oxycoupage (1A ; 101A, 201A), s'il est associé audit élément de manipulation (12 ; 112, 212), est éloigné du matériau à couper (35 ; 135, 235) et ne peut pas être activé, et au moins dans une position de fonctionnement (P') dans laquelle ledit chalumeau d'oxycoupage (1A ; 101A, 201A), lorsqu'il est associé audit élément de manipulation (12 ; 112, 212), est situé au niveau du matériau à couper et peut être activé ;
**caractérisé en ce qu'il comprend :**
- une structure porteuse transportable et de grandes dimensions (3 ; 103, 203), comprenant au moins une paroi de fond (3A ; 103A, 203A) ayant une forme sensiblement rectangulaire, et délimitant un espace (S) adapté pour loger à l'intérieur de ladite forme au moins lesdits moyens (2 ; 102, 202) de manipulation dudit dispositif d'oxycoupage (1 ; 101, 201) avec ledit élément de manipulation (12 ; 112, 212) dans une position de repos (R'),
- et **en ce que** ledit élément de manipulation (12 ; 112, 212) et ladite structure porteuse (3 ; 103, 203) sont profilés et dimensionnés de telle sorte de pouvoir déplacer au moins une partie (12B ; 112B, 212B) dudit élément de manipulation (12 ; 112, 212) qui est adaptée pour transporter ledit au moins un chalumeau d'oxycoupage (1A ; 101A, 201A) depuis l'intérieur de la structure porteuse (3 ; 103, 203) vers l'extérieur de la structure porteuse et vice versa, de manière à déplacer au moins ledit élément de manipulation de la position de repos (R') à une position de fonctionnement (P') et vice versa,
- et **en ce qu'**au moins dans ladite position de fonctionnement (P') de l'élément de manipulation (12 ; 112, 212), ledit élément de manipulation (12 ; 112, 212) est adapté pour supporter ledit au moins un chalumeau d'oxycoupage (1A ; 101A, 201A).

2. Système transportable selon la revendication 1, **caractérisé en ce que** la structure porteuse transportable et de grandes dimensions est un conteneur (3 ; 103, 203) comprenant la paroi de fond (3A ; 103A, 203A) et au moins deux parois latérales (3C à 3F ; 103C à 103F, 203C à 203F), et de préférence également une paroi supérieure (3B, 103B, 203B), lesdites parois (3A à 3F ; 103A à 103F, 203A à F) étant adaptées pour délimiter un corps de forme sensiblement parallélépipédique, ayant au moins une ouverture (3G ; 140, 240) prévue dans au moins une desdites parois (3A à 3F ; 103A à 103F) ou délimitée par deux ou plus desdites parois (3A à 3F ; 103A à 103F, 203A à F), dans lequel lesdites parois (3A à 3F ; 103A à 103F, 203A à F) délimitent l'espace (S) adapté pour loger dans celui-ci au moins ledit élément de manipulation (12, 112, 212) lorsque ledit élément de manipulation est dans une position de repos ( R'), et **en ce que** ledit élément de manipulation (12 ; 112, 212) et ledit conteneur (3 ; 103, 203) sont profilés et dimensionnés de telle sorte de déplacer au moins la partie (12B ; 112B, 212B) dudit élément de manipulation (12 ; 112, 212) qui est adaptée pour porter ledit au moins un chalumeau d'oxycoupage (1A ; 101A, 201A) depuis l'intérieur du conteneur vers l'extérieur du conteneur à travers ladite ouverture (3G ; 140 240) du conteneur et vice versa, de manière à déplacer au moins ladite partie (12B ; 112B, 212b) de l'élément de manipulation de la position de repos (R') à la position de fonctionnement (P') et vice versa.

3. Système transportable selon l'une quelconque des revendications précédentes, **caractérisé en ce que** la structure porteuse transportable et de grandes dimensions est un conteneur (3 ; 103, 203) et **en ce que** ledit conteneur est l'un des types suivants :
- un conteneur ayant les dimensions de conteneurs intermodaux standard ISO, du type 20 pieds ou 40 pieds,
- ou un conteneur ayant les dimensions de conteneurs standard, du type high-cube 40 pieds ou 45 pieds, ou 48 pieds ou 53 pieds,
- ou un conteneur de type « flat rack » ou « à toit ouvert ».

4. Système transportable selon l'une quelconque des revendications précédentes, **caractérisé en ce que** la structure porteuse transportable et de grandes dimensions (3, 103, 203) comprend, contraint à au moins une de ses parois (3A à 3F ; 103A à 103F, 203A à F) et/ou à une structure porteuse supplémentaire (290) portée par ladite structure porteuse transportable et de grandes dimensions (3, 103, 203), au moins un élément de guidage (4, 104, 204) adapté pour guider, de préférence le long d'un trajet rectiligne et parallèle ou perpendiculaire à un axe longitudinal (Z1 ; Z2) de ladite structure porteuse (3 ; 103, 203), les moyens (2 ; 102, 202) de manipulation du dispositif d'oxycoupage (1 ; 101, 201) d'une position de repos (R) à au moins une position de fonctionnement (P), de manière à déplacer au moins une partie (12B ; 112B, 212B) dudit élément de manipulation (12 ; 112, 212) qui est adaptée pour transporter ledit au moins un chalumeau d'oxycoupage (1A ; 101A, 201A) de l'intérieur de la structure porteuse (3 ; 103, 203) vers l'extérieur de la structure porteuse et vice versa, et pour déplacer au moins ledit élément de manipulation de la position de repos (R') à la position de fonctionnement (P') et vice versa.

5. Système transportable selon la revendication 4, **caractérisé en ce que** :
- l'au moins un élément de guidage (4, 104, 204) est contraint à l'intérieur de la structure porteuse : à deux faces mutuellement opposées de parois latérales (3C, 3D ; 103C, 103D) de ladite structure porteuse, et/ou à au moins un élément porteur (290) contraint à l'une des parois du conteneur,
- et **en ce que** l'au moins un élément de guidage (4, 104, 204) est contraint à une hauteur (H1 ; H11) mesurée à partir de la surface interne d'une paroi de fond (3A, 103A) de ladite structure porteuse qui est supérieure à 50% de la hauteur interne (H2, H12) de ladite structure porteuse et plus préférablement qui est comprise entre 60% et 90% de cette hauteur interne (H2 ; H12) et encore plus préférablement égale à environ 65% à 70% de cette hauteur interne.

6. Système transportable selon l'une quelconque des revendications précédentes, **caractérisé en ce que** la structure porteuse transportable et de grandes dimensions (3, 103, 203) est un conteneur et **en ce que** l'au moins une ouverture (3G ; 140, 240) pour le passage d'au moins ladite partie (12B ; 112B, 212B) de l'élément pour le déplacement de la position de repos (R') à la position de fonctionnement (P') et vice versa, est : une ouverture (3G) qui est habituellement prévue dans lesdits conteneurs et fermée par des portes (3F), ou une ouverture supplémentaire et dédiée (140, 240) prévue dans l'une des parois latérales (103A à F) dudit conteneur, de préférence dans l'une des plus grandes parois latérales du conteneur.

7. Système transportable selon l'une quelconque des revendications précédentes, **caractérisé en ce que** les moyens (2 ; 102, 202) de manipulation du dispositif d'oxycoupage (1 ; 101, 201) comprennent un chariot (8, 108, 208) auquel l'élément de manipulation (12, 112, 212) est raccordé ; dans lequel le chariot (8, 108, 208) a un corps de préférence : ayant une forme sensiblement rectangulaire et une largeur (L1, L14) inférieure à la largeur intérieure (L2 ; L15) de la structure porteuse transportable et de grandes dimensions (3 ; 103, 203),
- dans lequel le chariot (8 ; 108, 208) comporte de préférence des roues (7 ; 107, 207) adaptées pour venir en prise et être guidées par les éléments de guidage (4, 104, 204) prévus à l'intérieur de la structure porteuse transportable et de grandes dimensions (3 ; 103, 203),
- dans lequel le chariot (8 ; 108, 208) comprend des premiers moyens motorisés (15, 115 215) pour son déplacement le long des éléments de guidage (4, 104) prévus à l'intérieur de la structure porteuse transportable et de grandes dimensions (3 ; 103) ;
- dans lequel le chariot (8 ; 108, 208) comprend des seconds moyens motorisés (20, 120 220) pour le déplacement de l'élément de manipulation (12 ; 112212) adapté pour supporter ledit au moins un chalumeau d'oxycoupage,
- dans lequel de préférence le chariot (8, 108, 208) comprend un élément de guidage (17 ; 117 217) pour ledit élément de manipulation (12 ; 112 212) adapté pour autoriser uniquement une translation rectiligne et parallèle ou perpendiculaire à l'axe longitudinal (Z1, Z2) de la structure porteuse transportable et de grandes dimensions (3 ; 103 203) et profilé de manière à empêcher le bras de s'incliner et/ou de se soulever par rapport au chariot (8 ; 108 208).

8. Système transportable selon l'une quelconque des revendications précédentes, **caractérisé en ce qu'**il comprend des moyens d'aspiration (22, 222) comprenant une hotte d'extraction (22A, 22A), et au moins une conduite (22B, 22C ; 222b, 222C) pour acheminer les fumées générées lors de la coupe vers un dispositif d'aspiration et de filtration (23, 223),
- dans lequel de préférence ladite hotte d'extraction est raccordée à l'élément de manipulation (12 ; 112, 212) adapté pour supporter ledit au moins un chalumeau d'oxycoupage,
- dans lequel de préférence le dispositif d'aspiration et la hotte d'extraction (22A, 22A), et au moins une conduite (22B, 22C ; 222B, 222C) sont logés dans ladite structure porteuse transportable et de grandes dimensions (3, 103, 203) lorsque l'élément de manipulation (12 ; 112, 212) est dans la position de repos (R'), et **en ce qu'**au moins une partie de ladite conduite (22B, 22C ; 222b, 222C) est extensible de manière à pouvoir suivre les mouvements dudit élément de manipulation (12 ; 112, 212).

9. Système transportable selon l'une quelconque des revendications précédentes, **caractérisé en ce qu'**il comprend, associés à l'intérieur de la structure porteuse transportable et de grandes dimensions (3, 103, 203) :
- une pluralité de conduites (24A à E) raccordées à une station de contrôle des fluides (25, 125, 225), adaptées pour alimenter au moins les chalumeaux d'oxycoupage (1A ; 101A, 201A) avec les fluides nécessaires à leur fonctionnement, dans lequel également ladite station de contrôle des fluides est de préférence logée dans la structure porteuse transportable et de grandes dimensions (3, 103, 203) ;
- et/ou une pluralité de câbles électriques (29A à C) adaptés pour alimenter au moins les moteurs électriques des moyens (2 ; 102, 202) de manipulation du système et raccordés à une station d'alimentation (30, 130, 230), dans lequel également ladite station d'alimentation est de préférence logée dans la structure porteuse transportable et de grandes dimensions (3, 103, 203) ;
- et/ou une pluralité de conduites de refroidissement (33C, 33G, 33H) raccordées à une station de refroidissement (33, 133, 233), adaptées pour alimenter au moins les chalumeaux d'oxycoupage (1A, 101A, 201A) avec les fluides nécessaires à leur refroidissement ; dans lequel également ladite station de refroidissement (33, 133, 233) est de préférence logée dans la structure porteuse transportable et de grandes dimensions (3, 103, 203).

10. Système transportable selon l'une quelconque des revendications précédentes, **caractérisé en ce qu'**il comprend une pluralité de parois internes (11, 111, 211), associées à l'intérieur de la structure porteuse transportable et de grandes dimensions (3, 103, 203), qui sont adaptées pour délimiter au moins partiellement une pluralité de sièges (S1 à S6) au moins partiellement séparés et distincts les uns des autres ;
dans lequel lesdits sièges comprennent de préférence :
- un premier espace (S1) délimité et fermé au moins partiellement par des parois (11A), pour loger une station de contrôle des fluides (25, 125, 225), de préférence accessible depuis l'extérieur de la structure porteuse transportable et de grandes dimensions (3, 103, 203) à travers une ouverture (5A) prévue dans une paroi latérale (3C, 103C, 203C) de ladite structure porteuse, et munie de portes (6A, 106A, 206A) ;
- et/ou un deuxième espace (S2) délimité et fermé au moins partiellement par des parois (11B), pour loger des composants électriques et/ou de commande (30, 32 ; 130 ; 230) de préférence accessibles depuis l'extérieur du conteneur de préférence à travers une ouverture (5B, 105B ; 205B) prévue dans une paroi latérale (3C, 103C ; 203C) de ladite structure porteuse, et munie de portes (6B, 106B, 206B) ;
- et/ou un troisième espace (S3) délimité et fermé au moins partiellement par des parois (11C), pour loger un groupe électrogène (33) de préférence accessible depuis l'extérieur de la structure porteuse de préférence à travers une ouverture (5C, 105C 205C) prévue dans une paroi latérale (3D, 103D ; 203D) de la structure porteuse, et munie de portes (6C) ;
- et/ou un quatrième espace (S4) délimité et fermé au moins partiellement par des parois (11D), pour loger un dispositif de refroidissement (34, 134, 234), de préférence accessible depuis l'extérieur du conteneur à travers une ouverture (5D) prévue dans une paroi latérale (3D) de ladite structure porteuse, et des portes (6D) ;
- et/ou un cinquième espace (S5) délimité et fermé au moins partiellement par une paroi (11E), pour loger un dispositif de filtration des fumées extraites pendant l'oxycoupage (23), de préférence accessible depuis l'extérieur du conteneur à travers une ouverture (51) prévue dans une paroi latérale (3C) de ladite structure porteuse, et munie d'une porte de fermeture (6F) ;
- et/ou **en ce qu'**à proximité d'une ouverture (3G) de ladite structure porteuse depuis laquelle le dispositif d'oxycoupage (1) peut faire saillie, une autre paroi de protection (11F) est prévue, laquelle est adaptée pour diviser au moins partiellement l'espace interne de ladite structure porteuse en deux autres espaces (A1, A2) : un premier espace (Al) prévu à proximité de ladite ouverture (3G) et adapté pour loger la partie du dispositif de coupe comprenant les chalumeaux d'oxycombustion, lorsqu'ils sont en position de repos, et un second espace (A2) comprenant tout l'autre espace interne de ladite structure porteuse.
